(19) Europäisches Patentamt
European Patent Office
Office européen des brevets

(11) EP 4 618 670 A1

(12) **EUROPEAN PATENT APPLICATION**
published in accordance with Art. 153(4) EPC

(43) Date of publication:
17.09.2025 Bulletin 2025/38

(21) Application number: 22964707.8

(22) Date of filing: 07.11.2022

(51) International Patent Classification (IPC):
H04W 72/12 (2023.01)      H04W 72/04 (2023.01)
H04W 72/23 (2023.01)

(52) Cooperative Patent Classification (CPC):
H04W 72/04; H04W 72/0446; H04W 72/0453;
H04W 72/12; H04W 72/23

(86) International application number:
PCT/CN2022/130445

(87) International publication number:
WO 2024/098230 (16.05.2024 Gazette 2024/20)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(71) Applicant: Beijing Xiaomi Mobile Software Co.,
Ltd.
Beijing 100085 (CN)

(72) Inventor: WANG, Lei
Beijing 100085 (CN)

(74) Representative: Stöckeler, Ferdinand et al
Schoppe, Zimmermann, Stöckeler
Zinkler, Schenk & Partner mbB
Patentanwälte
Radlkoferstrasse 2
81373 München (DE)

(54) **CELL DETERMINATION METHODS AND APPARATUS, COMMUNICATION APPARATUS AND STORAGE MEDIUM**

(57) The present disclosure relates to cell determination methods and apparatus, a communication apparatus and a storage medium. One cell determination method comprises: determining at least one cell set corresponding to downlink control information for scheduling a plurality of cells; and, in respect of each first cell set of the at least one cell set, determining a reference cell in the first cell set, wherein a blinding detection resource occupied by the downlink control information for scheduling a plurality of cells when scheduling a cell in the first cell set is determined in the reference cell in the first cell set. In the present disclosure, cells in the first cell set may comprise scheduling cells and scheduled cells. Therefore, on this basis, the reference cell in the first cell set is not limited to the scheduling cells, but may be a scheduled cell, so that the blinding detection resource occupied by the downlink control information for scheduling a plurality of cells can be determined in the scheduled cell, thus helping to improve the downlink control information blinding detection efficiency and blinding detection performance of terminals.

FIG. 1

## Description

## FIELD

The present disclosure relates to the field of communication technologies, and in particular relates to a method, an apparatus and a system for determining a cell, a communication device and a computer-readable storage medium.

## BACKGROUND

In the related art, scheduling of one piece of downlink control information (DCI) in a cell only allows scheduling of data from one cell, such as scheduling a physical uplink shared channel (PUSCH) and a physical downlink shared channel (PDSCH). With the gradual fragmentation of a frequency resource, the demand for scheduling data from a plurality of cells will gradually increase.

## SUMMARY

In view of this, embodiments of the present disclosure provide a method, an apparatus and a system for determining a cell, a communication device and a computer-readable storage medium to solve the technical problems in the related art.

According to a first aspect of embodiments of the present disclosure, there is provided a method for determining a cell, performed by a terminal, including: determining at least one cell set corresponding to multi-cell scheduling downlink control information; and determining, for each first cell set in the at least one cell set, a reference cell in the first cell set, in which a blinding detection resource occupied by the multi-cell scheduling downlink control information in a case of scheduling a cell in the first cell set is determined in the reference cell in the first cell set.

According to a second aspect of embodiments of the present disclosure, there is provided a method for determining a cell, performed by a network device, including: determining at least one cell set corresponding to multi-cell scheduling downlink control information; and determining, for each first cell set in the at least one cell set, a reference cell in the first cell set, in which a blinding detection resource occupied by the multi-cell scheduling downlink control information in a case of scheduling a cell in the first cell set is determined in the reference cell in the first cell set.

According to a third aspect of embodiments of the present disclosure, there is provided an apparatus for determining a cell, including: a processing module configured to determine at least one cell set corresponding to multi-cell scheduling downlink control information; and determine, for each first cell set in the at least one cell set, a reference cell in the first cell set, in which a blinding detection resource occupied by the multi-cell scheduling downlink control information in a case of scheduling a cell in the first cell set is determined in the reference cell in the first cell set.

According to a fourth aspect of embodiments of the present disclosure, there is provided an apparatus for determining a cell, including: a processing module configured to determine at least one cell set corresponding to multi-cell scheduling downlink control information; and determining, for each first cell set in the at least one cell set, a reference cell in the first cell set, in which a blinding detection resource occupied by the multi-cell scheduling downlink control information in a case of scheduling a cell in the first cell set is determined in the reference cell in the first cell set.

According to a fifth aspect of embodiments of the present disclosure, there is provided a system for determining a cell, including: a terminal, and a network device, in which the terminal is configured to implement the method for determining the cell performed by the terminal, and the network device is configured to implement the method for determining the cell performed by the network device.

According to a sixth aspect of embodiments of the present disclosure, there is provided a communication device, including: a processor; and a memory for storing a computer program, in which in a case where the computer program is executed by the processor, the method for determining the cell performed by the terminal is implemented.

According to a seventh aspect of embodiments of the present disclosure, there is provided a communication device, including: a processor; and a memory for storing a computer program, in which in a case where the computer program is executed by the processor, the method for determining the cell performed by the network device is implemented.

According to an eighth aspect of embodiments of the present disclosure, there is provided a computer-readable storage medium, configured to store a computer program that, when executed by a processor, cause the method for determining the cell performed by the terminal to be implemented.

According to a ninth aspect of embodiments of the present disclosure, there is provided a computer-readable storage medium, configured to store a computer program that, when executed by a processor, cause the method for determining the cell performed by the network device to be implemented.

According to embodiments of the present disclosure, the terminal may determine the at least one cell set corresponding to the multi-cell scheduling downlink control information, determine, for each first cell set in the at least one cell set, the reference cell in the first cell set, and determine the blinding detection resource occupied by the multi-cell scheduling downlink control information in the reference cell in the first cell set in a case where the multi-cell scheduling downlink control information schedules the cell in the first cell set.

Since the cells included in the first cell set may include scheduling cells and scheduled cells, on this basis, the reference cell in the first cell set is not limited to the scheduling cell, but may include the scheduled cell, such that the blinding detection resource occupied by the multi-cell scheduling downlink control information may be determined on the scheduled cell. Accordingly, it is conducive to improving the blinding detection efficiency and blinding detection performance of the terminal for the DCI.

## BRIEF DESCRIPTION OF THE DRAWINGS

In order to clearly illustrate technical solutions in embodiments of the present disclosure, a brief description of drawings used in embodiments descriptions is given below. Obviously, the drawings in the following descriptions are only part embodiments of the present disclosure, and for those skilled in the art, other drawings may be obtained according to these drawings without creative labor.

FIG. 1 is a schematic flowchart illustrating a method for determining a cell according to an embodiment of the present disclosure.
FIG. 2 is a schematic flowchart illustrating another method for determining a cell according to an embodiment of the present disclosure.
FIG. 3 is a schematic flowchart illustrating a method for determining a cell according to an embodiment of the present disclosure.
FIG. 4 is a schematic flowchart illustrating yet another method for determining a cell according to an embodiment of the present disclosure.
FIG. 5 is a schematic flowchart illustrating yet another method for determining a cell according to an embodiment of the present disclosure.
FIG. 6 is a schematic flowchart illustrating yet another method for determining a cell according to an embodiment of the present disclosure.
FIG. 7 is a schematic diagram illustrating an application scenario according to an embodiment of the present disclosure.
FIG. 8 is a schematic diagram illustrating another application scenario according to an embodiment of the present disclosure.
FIG. 9 is a schematic flowchart illustrating a method for determining a cell according to an embodiment of the present disclosure.
FIG. 10 is a schematic block diagram illustrating an apparatus for determining a cell according to an embodiment of the present disclosure.
FIG. 11 is a schematic block diagram illustrating an apparatus for determining a cell according to an embodiment of the present disclosure.
FIG. 12 is a schematic block diagram illustrating a device for determining a cell according to an embodiment of the present disclosure.

FIG. 13 is a schematic block diagram illustrating a device for determining a cell according to an embodiment of the present disclosure.

## DETAILED DESCRIPTION

Reference will be made clearly and completely technical solutions in the embodiments of the present disclosure with accompanying drawings. Obviously, the embodiments described here are only part of the embodiments of the present disclosure and are not all embodiments of the present disclosure. Based on the embodiments of the present disclosure, other embodiments obtained by those skilled in the art without creative labor are within scope of the present disclosure.
Terms used herein in the embodiments of the present disclosure are only for the purpose of describing specific embodiments, but should not be construed to limit the embodiments of the present disclosure. As used in the embodiments of the present disclosure and the appended claims, "a/an", "said" and "the" in singular forms are intended to include plural forms, unless clearly indicated in the context otherwise. It should also be understood that the term "and/or" used herein represents and includes any or all possible combinations of one or more associated listed items.
It should be understood that, although terms such as "first," "second" and "third" may be used in embodiments of the present disclosure for describing various information, these information should not be limited by these terms. These terms are only used for distinguishing information of the same type from each other. For example, first information may also be referred to as second information, and similarly, the second information may also be referred to as the first information, without departing from the scope of the embodiments of the present disclosure. As used herein, the term "if" may be construed to mean "when" or "upon" or "in response to determining" depending on the context.
For purposes of brevity and ease of understanding, the terms used herein for describing the relationship of size are "greater than" or "less than", "higher than" or "lower than". However, it may be understood to those skilled in the art that the term "greater than" also encompasses the meaning of "greater than or equal to", the term "less than" also encompasses the meaning of "less than or equal to"; the term "higher than" encompasses the meaning of "higher than or equal to", and the term "lower than" also encompasses the meaning of "lower than or equal to".

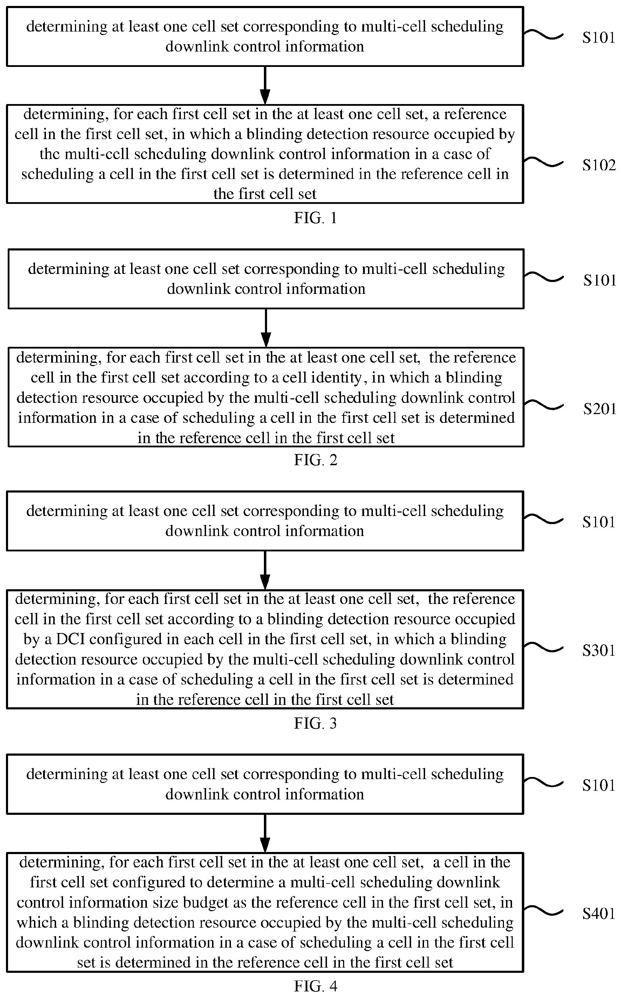

FIG. 1 is a schematic flowchart illustrating a method for determining a cell according to an embodiment of the present disclosure. The method for determining the cell shown in the present embodiment may be performed by a terminal, and the terminal includes but is not limited to communication devices such as a mobile phone, a tablet computer, a wearable device, a sensor, and an Internet of Things device. The terminal may communicate with a network device, and the network device includes but is not limited to network devices in 4G, 5G, 6G and other communication systems, such as a base station, a core network, and the like.

As shown in FIG. 1, the method for determining the cell may include the following steps.

In step S101, at least one cell set corresponding to multi-cell scheduling downlink control information is determined.

In step S102, for each first cell set in the at least one cell set, a reference cell in the first cell set is determined, in which a blinding detection resource occupied by the multi-cell scheduling downlink control information in a case of scheduling a cell in the first cell set is determined in the reference cell in the first cell set.

In an embodiment, in a case where the at least one cell set includes a plurality of cell sets, the plurality of cell sets may include same cell, or a plurality of cells may include no same cell.

In an embodiment, the multi-cell scheduling downlink control information may be simply referred to as MC-DCI, for example. The MC-DCI is configured to schedule a plurality of cells, specifically it may be configured to schedule data from the plurality of cells, such as scheduling a physical uplink shared channel (PUSCH), a physical downlink shared channel (PDSCH), and the like of one or more cells in the plurality of cells, thereby realizing scheduling of the plurality of cells through one DCI. Here, MC represents multi-cell.

In an embodiment, a format of the multi-cell scheduling downlink control information may be the same as a format of a traditional (legacy) DCI (e.g., a DCI format 0_0, a DCI format 0_1, etc.), or a newly defined format, e.g., a DCI format 0_3, a DCI format 1_3, etc. may be adopted.

In an embodiment, the multi-cell scheduling downlink control information may be scrambled by a radio network temporary identity (RNTI), for example, may be scrambled by a cell radio network temporary identity (C-RNTI), or may be scrambled by a newly defined RNTI.

Since the multi-cell scheduling downlink control information may be configured to schedule the plurality of cells, the multi-cell scheduling downlink control information will include relatively more information relative to a DCI configured to schedule a single cell in the legacy DCI, and the blinding detection resource occupied by the multi-cell scheduling downlink control information will also be relatively more. Although the terminal may receive the multi-cell scheduling downlink control information for scheduling the plurality of cells (scheduled cells) on a scheduling cell, it will be too burdensome for the scheduling cell in a case where all blinding detection resources occupied are determined based on the scheduling cell, which is not conducive to ensuring good blinding detection efficiency and blinding detection performance.

According to embodiments of the present disclosure, the terminal may determine the at least one cell set corresponding to the multi-cell scheduling downlink control information, determine, for each first cell set in the at least one cell set, the reference cell in the first cell set, and determine the blinding detection resource occupied by the multi-cell scheduling downlink control information in the reference cell in the first cell set in a case where the multi-cell scheduling downlink control information schedules the cell in the first cell set.

For example, the at least one cell set includes a first cell set#1, a first cell set#2 and other cell sets, and a reference cell#1 in the set#1 and a reference cell#2 in the set#2 may be determined. Further, in a case where the multi-cell scheduling downlink control information is subsequently received, and it is determined that the multi-cell scheduling downlink control information is configured to schedule a plurality of cells in the set#1, the blinding detection resource occupied by the multi-cell scheduling downlink control information may be determined on the cell#1; or in a case where it is determined that the multi-cell scheduling downlink control information is configured to schedule a plurality of cells in the set#2, the blinding detection resource occupied by the multi-cell scheduling downlink control information may be determined on the cell#2.

The multi-cell scheduling downlink control information may schedule the plurality of cells, for example, schedule the plurality of cells in the first cell set. In this case, in the present embodiment, the reference cell in the first cell set may be determined to determine the blinding detection resource occupied by the multi-cell scheduling downlink control information in the reference cell in a case of scheduling the cell in the first cell set, or a proportional coefficient may be introduced to determine the blinding detection resource, which is conducive to ensuring the blinding detection efficiency and blinding detection performance of the terminal for the downlink control information and ensuring the fairness of the allocation of the blinding detection resource.

After determining the reference cell, the terminal may determine a configuration of a search space (SS) and/or a configuration of a control resource set (CORESET) corresponding to the multi-cell scheduling downlink control information configured to the reference cell, and may further determine the blinding detection resource occupied by the multi-cell scheduling downlink control information according to the configuration of the SS and/or the configuration of the CORESET, for example, determine a time domain resource and a frequency domain resource for blindly detecting the multi-cell scheduling downlink control information, and then calculate a blinding detection resource occupied by all DCIs (for example, the multi-cell scheduling downlink control information and the legacy DCI) including the multi-cell scheduling downlink control information on a slot or a span for blindly detecting the multi-cell scheduling downlink control information.

It should be noted that the reference cell in the first cell set may be one cell or the plurality of cells. These two situations will be described below with examples.

In an embodiment, the blinding detection resource includes at least one of:

physical downlink control channel (PDCCH) candidates; or
a control channel element (CCE).

Determining the blinding detection resource refers to determining a numeric count of blinding detection resources. For example, for the above two kinds of blinding detection resources, it refers to determining a numeric count of at least one blinding detection resource in the PDCCH candidates and the CCE occupied in a certain time domain range, for example, a slot range or a PDCCH span range. It should be noted that the blinding detection resources determined in the present disclosure are not limited to the PDCCH candidates and the CCE above-mentioned, and other blinding detection resources may also be determined as needed. For example, the blinding detection resources determined may include blind decoding (BD), in which the BD refers to a numeric count of PDCCH candidates occupied over a period of time.

The manner for determining the reference cell in the first cell set is illustratively described below by several embodiments. The manner for determining the reference cell in the first cell set may be determined according to a predefined rule (for example, a protocol agreement) or may be determined according to an indication of a network device, which is not limited in the present disclosure.

FIG. 2 is a schematic flowchart illustrating another method for determining a cell according to an embodiment of the present disclosure. As shown in FIG. 2, determining a reference cell in a first cell set includes the following steps.

In step S201, the reference cell in the first cell set is determined according to a cell identity.

In an embodiment, in a case of determining the reference cell in the first cell set, a cell identity (cell ID) of each cell in the first cell set may be determined first, and then the reference cell may be selected among the cells included in the first cell set according to the cell ID of each cell.

In an embodiment, determining the reference cell in the first cell set according to the cell identity includes:

determining a cell having a maximum cell identity or a cell having a minimum cell identity in the first cell set as the reference cell in the first cell set in a case where the reference cell in the first cell set includes one cell; or
determining a plurality of cells in the first cell set in a descending order of the cell identities or a plurality of cells in the first cell set in an ascending order of the cell identities as the reference cell in the first cell set in a case where the reference cell in the first cell set includes the plurality of cells.

In an embodiment, in a case where the reference cell in the first cell set includes one cell, determining the reference cell in the first cell set according to the cell identity includes that the cell having the maximum cell identity or the cell having the minimum cell identity may be determined as the reference cell in the first cell set.

For example, the first cell set includes a cell#1 (the cell ID is 1), a cell#2 (the cell ID is 2), a cell#3 (the cell ID is 3), and a cell#4 (the cell ID is 4). In a case where the cell having the maximum cell identity is determined as the reference cell in the first cell set, the cell#4 may be determined as the reference cell in the first cell set. In a case where the cell having the minimum cell identity is determined as the reference cell in the first cell set, the cell#1 may be determined as the reference cell in the first cell set.

In an embodiment, in a case where the reference cell in the first cell set includes the plurality of cells, determining the reference cell in the first cell set according to the cell identity includes that the plurality of cells in the first cell set in a descending order of the cell identities or the plurality of cells in the first cell set in an ascending order of the cell identities may be determined as the reference cell in the first cell set.

For example, the first cell set includes the cell#1 (the cell ID is 1), the cell#2 (the cell ID is 2), the cell#3 (the cell ID is 3), and the cell#4 (the cell ID is 4), and a numeric count of the reference cells is 2. In a case where the cell having the maximum cell identity is determined as the reference cell in the first cell set, the cell#4 and the cell#3 may be determined as the reference cells in the first cell set. In a case where the cell having the minimum cell identity is determined as the reference cell in the first cell set, the cell#1 and the cell#2 may be determined as the reference cells in the first cell set.

In an embodiment, the cell in the first cell set may be sorted in a first order (e.g. determined according to a predefined rule or determined according to a network indication), and then the reference cell in the first cell set may be determined according to a sorting number of the cells. For example, the first order includes, but is not limited to, a descending order and an ascending order of the cell identities, or an ascending order or a descending order of blinding detection resources corresponding to the DCI configured in each cell, in which the manner for determining the blinding detection resources corresponding to the DCI configured in each cell will be described later.

Still taking the first cell set including four cells, the cell#1, the cell#2, the cell#3, and the cell#4 as an example. For example, the first order is a descending order of the cell IDs, and a sorting result is the cell#4, the cell#3, the cell#2, and the cell #1. For example, a cell with a sorting number 3 is determined as the reference cell in the first cell set, it is known that the cell#2 is a cell with the sorting number 3, and the cell#2 may be determined as the reference cell in the first cell set.

FIG. 3 is a schematic flowchart illustrating a method for determining a cell according to an embodiment of the present disclosure. As shown in FIG. 3, determining a reference cell in a first cell set includes the following steps.

In step S301, the reference cell in the first cell set is determined according to a blinding detection resource occupied by a DCI configured in each cell in the first cell set.

In an embodiment, in a case of determining the reference cell in the first cell set, the blinding detection resource occupied by the DCI configured in each cell in the first cell set may be determined first, and then the reference cell in the first cell set may be determined according to the blinding detection resource occupied by the DCI configured in each cell in the first cell set.

In an embodiment, determining the reference cell in the first cell set according to the blinding detection resource occupied by the DCI configured in each cell in the first cell set includes:

> determining a cell having fewest blinding detection resources occupied by the DCI in the first cell set as the reference cell in the first cell set in a case where the reference cell in the first cell set includes one cell; or
> determining a plurality of cells in the first cell set in an ascending order of blinding detection resources occupied by the DCI (a DCI configured in each cell in the first cell set) as the reference cell in the first cell set in a case where the reference cell in the first cell set includes the plurality of cells.

The blinding detection resource occupied by the DCI configured in each cell may be a blinding detection resource occupied by a legacy DCI configured in each cell, or may be a blinding detection resource occupied by all DCIs configured in each cell (including, for example, the legacy DCI and multi-cell scheduling downlink control information).

In an embodiment, taking the blinding detection resource occupied by the legacy DCI configured in each cell as an example, since the more blinding detection resources are occupied by the legacy DCI configured for the cell, the fewer blinding detection resources are occupied by the multi-cell scheduling downlink control information under a condition that the blinding detection resource corresponding to the DCI configured for the cell is constant. Therefore, in a case where the reference cell in the first cell set includes one cell, the blinding detection resource occupied by the legacy DCI configured in each cell in the first cell set may be determined first, and then the cell having fewest blinding detection resources occupied by the legacy DCI may be determined as the reference cell in the first cell set. Accordingly, it is conducive to ensuring the blinding detection capability of the terminal in the reference cell for the multi-cell scheduling downlink control information.

In an embodiment, taking the blinding detection resources occupied by all DCIs configured in each cell as an example, since the fewer blinding detection resources are occupied by all DCIs configured for the cell, the blinding detection complexity of the terminal will be relatively lower. Therefore, in a case where the reference cell in the first cell set includes one cell, the blinding detection resource occupied by all DCIs configured in each cell in the first cell set may be determined first, and then the cell having fewest blinding detection resources occupied by all DCIs may be determined as the reference cell in the first cell set. Accordingly, it is conducive to reducing the blinding detection complexity of the terminal in the reference cell.

For example, in a case where the first cell set includes a cell#1, a cell#2, a cell#3, and a cell#4, the blinding detection resource occupied by the DCI configured for each cell may be determined for these four cells. For example, the blinding detection resource occupied by the DCI configured for the cell#1 is R1, the blinding detection resource occupied by the DCI configured for the cell#2 is R2, the blinding detection resource occupied by the DCI configured for the cell#3 is R3, and the blinding detection resource occupied by the DCI configured for the cell#4 is R4. An ascending order of the four blinding detection resources is R2, R3, R4, and R1. That is, in a case where the fewest blinding detection resource R2 is occupied by the DCI configured on the cell#2, the cell#2 may be selected as the reference cell for determining the blinding detection resource occupied by the multi-cell scheduling downlink control information.

It should be noted that, in embodiments of the present disclosure, for a certain cell, determining the blinding detection resource occupied by the DCI configured for the cell includes, but is not limited to, the following two manners.

Manner 1: a search space configured for the cell is determined, and all blinding detection resources (e.g., PDCCH candidates) of the DCI configured in the search space are summed.

Manner 2: a search space configured for the cell is determined, and blinding detection resources corresponding to DCI within a specific time unit in the search space are summed. The specific time unit may be one or more frames, and/or one or more subframes, and/or one or more slots, and/or one or more symbols, and/or one or more PDCCH spans, which may be specified by a predefined rule or indicated by a network device.

In an embodiment, taking the blinding detection resource occupied by the legacy DCI configured in each cell as an example, the more blinding detection resources are occupied by the legacy DCI configured for the cell, the fewer blinding detection resources are occupied by the multi-cell scheduling downlink control information. Therefore, in a case where the reference cell in the first cell set includes the plurality of cell, the blinding detection resource occupied by the legacy DCI configured in each cell in the first cell set may be determined first, and then the plurality of cells in the first cell set may be determined as the reference cell in the first cell set in an ascending order of the blinding detection resources occupied by the legacy DCI. Accordingly, it is conducive to ensuring the blinding detection capability of the terminal in the reference cell for the multi-cell scheduling downlink control information.

In an embodiment, taking the blinding detection resources occupied by all DCIs configured in each cell as an example, since the fewer blinding detection resources are occupied by all DCIs configured for the cell, the blinding detection complexity of the terminal will be relatively lower. Therefore, in a case where the reference cell in the first cell set includes the plurality of cell, the blinding detection resource occupied by all DCIs configured in each cell in the first cell set may be determined first, and then the plurality of cells in the first cell set may be determined as the reference cell in the first cell set in an ascending order of the blinding detection resources occupied by all DCIs. Accordingly, it is conducive to ensuring the blinding detection capability of the terminal in the reference cell for the multi-cell scheduling downlink control information.

For example, a numeric count of the reference cells is 2, the first cell set includes the cell#1, the cell#2, the cell#3, and the cell#4, and the blinding detection resource occupied by the DCI configured for each cell may be determined for these four cells. For example, the blinding detection resource occupied by the DCI configured for the cell#1 is R1, the blinding detection resource occupied by the DCI configured for the cell#2 is R2, the blinding detection resource occupied by the DCI configured for the cell#3 is R3, and the blinding detection resource occupied by the DCI configured for the cell#4 is R4. An ascending order of the four blinding detection resources is R2, R3, R4, and R1. That is, the fewest blinding detection resource R2 is occupied by the DCI configured on the cell#2, followed by the blinding detection resource R3 occupied by the DCI configured on the cell#3. Therefore, the cell#2 and the cell#3 may be selected as the reference cell for determining the blinding detection resource occupied by the multi-cell scheduling downlink control information. Determination of the blinding detection resource occupied by the DCI configured in the cell has been introduced above and will not be repeated here.

In an embodiment, the DCI includes at least one of:

> a traditional DCI, also known as the legacy DCI, such as DCI 0_0, DCI 0_1, DCI 1_0, DCI 1_1, DCI 2_0, DCI 2_1, and the like; or
> all DCIs configured in the cell, for example, including the legacy DCI and the multi-cell scheduling downlink control information.

FIG. 4 is a schematic flowchart illustrating yet another method for determining a cell according to an embodiment of the present disclosure. As shown in FIG. 4, determining a reference cell in a first cell set includes the following steps.

In step S401, a cell in the first cell set configured to determine a multi-cell scheduling downlink control information size budget is determined as the reference cell in the first cell set.

In an embodiment, in a case where the multi-cell scheduling downlink control information schedules a plurality of cells in the first cell set, the multi-cell scheduling downlink control information size (that is, a numeric count of bits occupied) budget may be determined by at least one cell in the plurality of cells. The at least one cell specifically aligns a size of a DCI (a DCI including the multi-cell scheduling downlink control information) (a derivation of alignment process for a terminal).

Therefore, in a case of selecting the reference cell, at least one cell configured to determine the multi-cell scheduling downlink control information size budget may be selected as the reference cell. Therefore, in a process of scheduling the plurality of cells by the multi-cell scheduling downlink control information, a determination operation needing to be performed by the scheduled cell may be concentrated on one cell, which is conducive to simplifying the configuration logic for the cell.

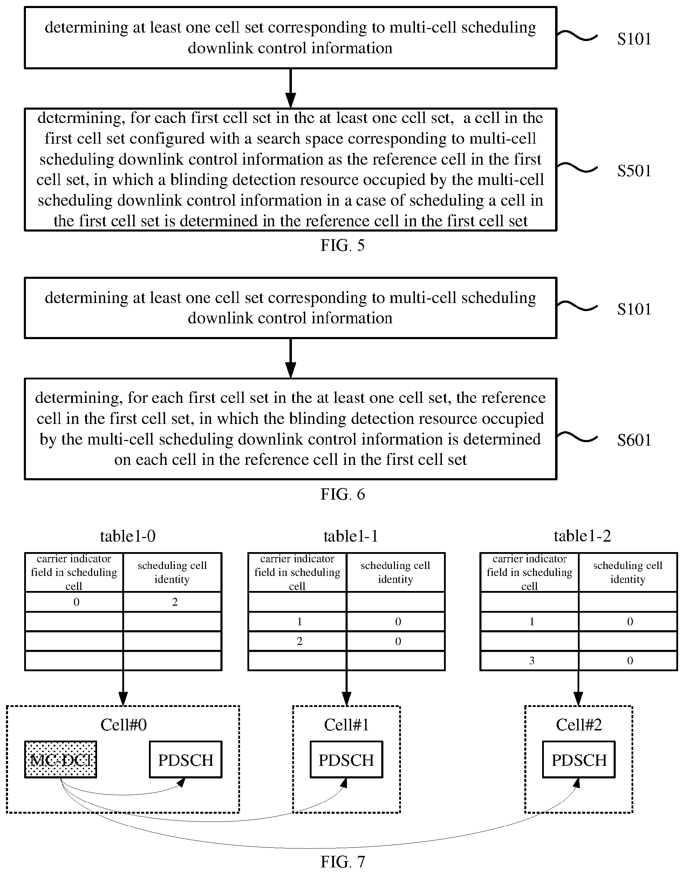

FIG. 5 is a schematic flowchart illustrating yet another method for determining a cell according to an embodiment of the present disclosure. As shown in FIG. 5, determining a reference cell in a first cell set includes the following steps.

In step S501, a cell in the first cell set configured with a search space corresponding to the multi-cell scheduling downlink control information is determined as the reference cell in the first cell set.

In an embodiment, in a case of determining the reference cell in the first cell set, the search space corresponding to the multi-cell scheduling downlink control information for scheduling the cell in the first cell set may be determined first, and then a cell configured with the search space corresponding to the multi-cell scheduling downlink control information is determined as the reference cell from the cell included in the first cell set. For example, in a case where the search space is SS#1, that is, the SS identified as 1, a cell (which may be one or more cells) configured with the SS identified as 1 may be determined as the reference cell from the cell included in the first cell set.

It should be noted that the above-described several embodiments for determining the reference cell in the first cell set may be implemented separately or may be combined as needed. For example, a cell configured with the search space corresponding to the multi-cell scheduling downlink control information may be determined from the first cell set. In a case where the plurality of cells are determined, a cell having fewest blinding detection resources occupied by a DCI may be further determined as the reference cell from the plurality of cells.

FIG. 6 is a schematic flowchart illustrating yet another method for determining a cell according to an embodiment of the present disclosure. As shown in FIG. 6, in a case where a reference cell in a first cell set includes a plurality of cells, determining a blinding detection resource occupied by multi-cell scheduling downlink control information in a case of scheduling a cell in the first cell set in the reference cell in the first cell set includes the following steps.

In step S601, the blinding detection resource occupied by the multi-cell scheduling downlink control information configured is determined on each cell in the reference cell in the first cell set.

In an embodiment, in a case where the reference cell includes the plurality of cells, the blinding detection resource occupied by the multi-cell scheduling downlink control information may be determined on each cell of the plurality of cells.

Taking the first cell set including a cell#1, a cell#2, a cell#3, and a cell#4 as an example.

In a case where the reference cells determined are the cell#1 and the cell#2, the blinding detection resource occupied by the multi-cell scheduling downlink control information may be determined on the cell#1, and the blinding detection resource occupied by the multi-cell scheduling downlink control information may be determined on the cell#2.

In a case where all cells in the first cell set are determined as the reference cells, the blinding detection resource occupied by the multi-cell scheduling downlink control information may be determined on the cell#1, the blinding detection resource occupied by the multi-cell scheduling downlink control information may be determined on the cell#2, the blinding detection resource occupied by the multi-cell scheduling downlink control information may be determined on the cell#3, and the blinding detection resource occupied by the multi-cell scheduling downlink control information may be determined on the cell#4.

In an embodiment, determining the blinding detection resource occupied by the multi-cell scheduling downlink control information on each cell in the reference cell in the first cell set includes: determining the blinding detection resource according to a determination result and a quantization coefficient on each cell.

In a case of determining the blinding detection resource occupied by the multi-cell scheduling downlink control information on each cell in the reference cell in the first cell set, the determination result on each cell (that is, the blinding detection resource determined) may be processed with the quantization coefficient (for example, multiplication, division, addition, subtraction, square root, logarithm, and the like of the determination result according to the quantization coefficient) as a final blinding detection resource. For example, a determination result on a certain cell may be multiplied by the quantization coefficient as the blinding detection resource finally determined on this cell.

In an embodiment, the quantization coefficient is determined according to a numeric count of a plurality of cells included in the reference cell (for example, all cells or part of cells in the first cell set). For example, the quantization coefficient may be 1/K, where K represents a numeric count of cells included in the reference cell. Accordingly, it is conducive to reducing the overall burden for determining the blinding detection resource occupied by the multi-cell scheduling downlink control information on the plurality of cells.

Taking the first cell set including a cell#1, a cell#2, a cell#3, and a cell#4 as an example.

In a case where the reference cells determined are the cell#1 and the cell#2, the quantization coefficient is 1/2. A determination result A of the blinding detection resource occupied by the multi-cell scheduling downlink control information determined on the cell#1 may be multiplied by 1/2 to obtain A/2 as the blinding detection resource occupied by the multi-cell scheduling downlink control information determined on the cell#1. A determination result B obtained by determining the blinding detection resource occupied by the multi-cell scheduling downlink control information on the cell#2 may be multiplied by 1/2 to obtain B/2 as the blinding detection resource occupied by the multi-cell scheduling downlink control information determined on the cell#1.

In a case where the reference cells determined are the cell#1, the cell#2, the cell#3, and the cell#4, the quantization coefficient is 1/4. The determination result A of the blinding detection resource occupied by the multi-cell scheduling downlink control information determined on the cell#1 may be multiplied by 1/4 to obtain A/4 as the blinding detection resource occupied by the multi-cell scheduling downlink control information determined on the cell#1. The determination result B obtained by determining the blinding detection resource occupied by the multi-cell scheduling downlink control information on the cell#2 may be multiplied by 1/4 to obtain B/4 as the blinding detection resource occupied by the multi-cell scheduling downlink control information determined on the cell#1. A determination result C of the blinding detection resource occupied by the multi-cell scheduling downlink control information determined on the cell#3 may be multiplied by 1/4 to obtain C/4 as the blinding detection resource occupied by the multi-cell scheduling downlink control information determined on the cell#3. A determination result D obtained by determining the blinding detection resource occupied by the multi-cell scheduling downlink control information on the cell#4 may be multiplied by 1/4 to obtain D/4 as the blinding detection resource occupied by the multi-cell scheduling downlink control information determined on the cell#4.

In an embodiment, the blinding detection resource occupied by the multi-cell scheduling downlink control information in a case of scheduling a cell in each first cell set in a plurality of first cell sets is determined on the same reference cell in a case where the at least one cell set includes a plurality of cell sets and an intersection cell exists among the plurality of cell sets, and the plurality of first cell sets include the same reference cell.

In an embodiment, in a case where the at least one cell set includes the plurality of cell sets, the intersection cell may exist among the plurality of cell sets (including the same cell), or no intersection cell exists among the plurality of cell sets (not including the same cell).

Taking two cell sets as an example.

In a case where the cell set#1 is {cell#1, cell#2, cell#3}, and the cell set#2 is {cell#1, cell#4, cell#5}, an intersection {cell#1} exists between the set#1 and the set#2, and the intersection cell is the cell#1.

In a case where the cell set#1 is {cell#1, cell#2, cell#3}, and the cell set#3 is {cell#4, cell#5, cell#6}, no intersection exists between the set#1 and the set#3.

In a case where the intersection cell exists among the plurality of cell sets, the same reference cell may be determined in a case where the reference cell is determined for each first cell set in the plurality of cell sets. In this case, the blinding detection resource occupied by the multi-cell scheduling downlink control information in a case of scheduling the cell in each first cell set whose intersection is the same reference cell may be determined on the same reference cell. In this case, the blinding detection resource occupied by the multi-cell scheduling downlink control information determined on the same reference cell is a sum of the blinding detection resource occupied by the multi-cell scheduling downlink control information determined for each first cell set.

For example, in a case where the reference cell in the set#1 is determined as the cell#1, and the reference cell in the set#2 is determined also as the cell#1, the cell#1 is the same reference cell. Therefore, the blinding detection resource occupied by the multi-cell scheduling downlink control information in a case of scheduling the plurality of cells by the multi-cell scheduling downlink control information in the set#1 is determined on the cell#1, for example, A, and the blinding detection resource occupied by the multi-cell scheduling downlink control information in a case of scheduling the plurality of cells by the multi-cell scheduling downlink control information in the set#2 is determined on the cell#1, for example, B. Therefore, the blinding detection resource occupied by the multi-cell scheduling downlink control information determined on the cell#1 is a sum of A and B.

It should be noted that, in embodiments of the present disclosure, for a certain cell, determining the blinding detection resource occupied by the multi-cell scheduling downlink control information configured for the cell includes, but is not limited to, the following two manners.

Manner 1: a search space configured for the cell is determined, and all blinding detection resources (e.g., PDCCH candidates) of the multi-cell scheduling downlink control information in the search space are summed.

Manner 2: a search space configured for the cell is determined, and blinding detection resources of the multi-cell scheduling downlink control information within a specific time unit in the search space are summed. The specific time unit may be one or more frames, and/or one or more subframes, and/or one or more slots, and/or one or more symbols, which may be specified by a predefined rule or indicated by a network device.

In an embodiment, in a case where the at least one cell set includes a plurality of cell sets and the intersection cell exists among the plurality of cell sets, determining, for each first cell set in the at least one cell set, the reference cell in the first cell set includes:

determining, for each first cell set in a plurality of first cell sets, the reference cell in the first cell set, in which the reference cell is different in each first cell set.

In an embodiment, according to the above embodiments, in a case where the at least one cell set includes the plurality of cell sets and the intersection cell exists among the plurality of cell sets, the same reference cell may be determined in a case where the reference cell is determined for each first cell set in the at least one cell set. Then it is necessary to determine the blinding detection resource occupied by the multi-cell scheduling downlink control information on the same reference cell in a case of scheduling the cell in each first cell set whose the intersection is the same reference cell. Although it is conducive to simplifying the configuration logic, it has a heavy determination burden for the same reference cell.

Therefore, from the perspective of determination burden of the cell, in the present embodiment, in a case where the at least one cell set includes the plurality of cell sets and the intersection cell exists among the plurality of cell sets, different reference cells may be determined in individual first cell sets, thereby avoiding excessive determination burden on a certain reference cell.

For example, for the plurality of cell sets:

First, a sorting manner (which may be referred to as a priority) of the cell sets may be defined, for example, sorting the cell sets in an ascending order according to the cell set identity (ID), or sorting the cell sets in a descending order according to the cell set identity, or sorting the cell sets in a descending order according to the blinding detection resource occupied by the DCI configured for one or more cells in each cell set, or sorting the cell sets in an ascending order according to the blinding detection resources occupied by the DCI configured for one or more cells in each cell set. The following description mainly takes sorting the cell sets in an ascending order according to the cell set identity as an example.

Second, for a set n (identified as n) after sorting, cells included in the set n are determined, and the reference cell corresponding to all sets m (which may be one or more cells) with an identity less than n is determined, in which the blinding detection resource occupied by the multi-cell scheduling downlink control information may be determined in the reference cell in a case of scheduling a plurality of cells in the set m by the MC DCI.

Then, a second cell set corresponding to the cell set n is determined. In a case where the reference cell in the set m belongs to the cell set n, the second cell set is redetermined, and the second cell set does not include the reference cell. That is, the second cell set is equal to a cell range after all cells included in the set n exclude the reference cell belonging to the set n (which may be a reference cell determined in the set m).

Final, the reference cell is determined (refer to the above embodiments) from the cells included in the second cell set, and the reference cell determined is configured to determine the blinding detection resources occupied by the multi-cell scheduling downlink control information in a case of scheduling the plurality of cells in the set n by the multi-cell scheduling downlink control information.

Taking determination of the reference cell according to the cell ID as an example, the above process is represented by pseudo code as follows:

> determining a first cell set index $\gamma(j)$, in which $\gamma(j)$ gradually increases as j (j=0, 1, 2, ...) increases;
> initial $\gamma(0)$, which defines a set $\vartheta=\emptyset$ corresponding to the reference cell;
> while j≤N (N is a numeric count of sets in at least one cell set corresponding to the multi-cell scheduling downlink control information);
> 1 determining a minimum cell identity $n_j$ in all cells corresponding to the set $\gamma(j)$;
> if $n_j \notin \vartheta$;
> determining that a cell $n_j$ is a reference cell for determining the blinding detection resources occupied by the MC DCI in a case of scheduling the plurality of cells in the set $\gamma(j)$;
> break;
> $\vartheta=\vartheta\cup n_j$;
> else;
> $\gamma(j)= \gamma(j)\backslash n_j$;
> return 1;
> j=j+1.

Taking three first cell sets as an example, the first cell set includes the set#1 as {Cell#1, Cell#2, Cell#3}, the set#2 as {Cell#1, Cell#2, Cell#4}, and the set#3 as {Cell#3, Cell#4, Cell#5}. The cell sets are sorted in an ascending order of the cell identities as the set#1, the set#2, and the set#3. For example, the reference cell is determined by determining a cell having the minimum cell identity in the first cell set as the reference cell.

First, the reference cell is determined in the set#1 (that is, a cell set corresponding to $\gamma(1)$), and the cell corresponding to the minimum cell ID in the first cell set is taken as an example. For example, in a case where the reference cell in the set#1 is determined as the cell#1, the cell#1 belongs to a set $\vartheta$.

Further, the reference cell is determined in the set#2 (that is, a cell set corresponding to $\gamma(2)$). Since the cell#1 in the set#2 belongs to the set $\vartheta$, the set#2 is redefined as a set of all other remaining cells after excluding the cell#1, that is, the set#2 is redefined as {Cell#2, Cell#4}. The cell#2 having the minimum cell identity is selected in the set#2, and the cell#2 does not belong to the set $\vartheta$, then the cell#2 is used as the reference cell in the set#2, and the set $\vartheta$ is redefined such that the cell#2 belongs to the set $\vartheta$.

Next, the reference cell is determined in the set#3 (that is, a cell set corresponding to $\gamma(3)$). Considering that the cell belonging to the set $\vartheta$ is not included in the set#3, it is determined that the cell corresponding to the minimum cell ID in the set#3 is the cell#3. Since the cell#3 does not belong to the set $\vartheta$, the cell#3 may be used as the reference cell in the set#3, and the set $\vartheta$ is redefined such that the cell#2 belongs to the set $\vartheta$.

Accordingly, the reference cell in each of the first cell sets may be determined for the above three first cell sets, and it may be ensured that the reference cells in individual first cell sets are different.

A manner for determining at least one cell set corresponding to the multi-cell scheduling downlink control information will be exemplarily described below with reference to several embodiments.

In an embodiment, determining the at least one cell set corresponding to the multi-cell scheduling downlink control information includes:

> determining a configuration parameter for each cell in a plurality of cells (e.g., cells that may be scheduled by the multi-cell scheduling downlink control information), in which the configuration parameters include but are not limited to a set identity, a cell identity, a sequence number, and a carrier indicator field (CIF); and
> determining that a cell having the same configuration parameter belongs to a cell set corresponding to the multi-cell scheduling downlink control information.

Taking four cells, the cell#1, the cell#2, the cell#3, and the cell#4, and the configuration parameter including the CIF as an example, the CIF configured for each of the four cells may be determined (for example, determined according to a radio resource control (RRC) signaling). For example, in a case where the CIF configured for the cell#1 is 01, the CIF configured for the cell#2 is 01, the CIF configured for the cell#3 is 02, and the CIF configured for the cell#4 is 02, it is determined that the cell#1 and the cell#2 have the same CIF, and the cell#3 and the cell#4 have the same CIF. Therefore, the cell#1 and the cell#2 are classified into a cell set {Cell#1, Cell#2} corresponding to the multi-cell scheduling downlink control information, and the cell#3 and the cell#4 are classified into another cell set {Cell#3, Cell#4} corresponding to the multi-cell scheduling downlink control information.

In an embodiment, determining the at least one cell set corresponding to the multi-cell scheduling downlink control information includes:

receiving, in a first cell, indication information sent by the network device; determining a plurality of cell groups according to the indication information received in a plurality of first cells; determining a target cell group to which the first cell belongs among a plurality of cell groups, and a cell group set to which the target cell group belongs; and determining a cell set corresponding to the cell group set.

A terminal may receive the indication information sent by the network device in the plurality of first cells, in which the indication information may indicate an association relationship between a value of the CIF corresponding to the first cell where the indication information is received and a scheduling cell identity, and the terminal may determine the plurality of cell groups according to an association relationship corresponding to each first cell. The association relationship may specifically be an association relationship between the value of the carrier indicator field in a scheduling cell (*cif-InScheduingCell*) and the scheduling cell identity.

The terminal may determine whether the first cell is a cell scheduled by the multi-cell scheduling downlink control information received in a second cell based on:

determining a serving cell configuration (*ServingCell-Config*) of an information element (IE) in an RRC message, then determining a cross-carrier scheduling configuration (*CrossCarrierSchedulingConfig*) in the serving cell configuration, and then determining scheduling cell information (*schedulingCellInfo*) in the cross-carrier scheduling configuration, and further determining a scheduling cell identity (*schedulingCellId*) and *cif-InSchedulingCell* in the *schedulingCellInfo* in a case where an indication value of the *schedulingCellInfo* is other.

In a case where the scheduling cell identity configured in the RRC message is the same as an identity of the second cell, and a value of *cif-InSchedulingCell* configured in the RRC message is the same as a value of the CIF in the multi-cell scheduling downlink control information received in the second cell, it may be determined that the multi-cell scheduling downlink control information received in the second cell is configured to schedule the first cell.

The association relationship may define a correspondence relationship between values of a plurality of carrier indicator fields and a plurality of scheduling cell identities, and is not limited to association of a value of one carrier indicator field with one scheduling cell identity. Therefore, in a case where the network device sends the multi-cell scheduling downlink control information to the terminal according to the association relationship, it is conducive to improving the scheduling flexibility of the multi-cell scheduling downlink control information for the first cell. For example, the network device may set a value of the CIF in the multi-cell scheduling downlink control information sent according to an association relationship corresponding to the first cell that needs to be scheduled, thereby dynamically adjusting the plurality of cells (the cell groups) scheduled.

FIG. 7 is a schematic diagram illustrating another application scenario according to an embodiment of the present disclosure.

As shown in FIG. 7, taking three cells, a cell#0 (a cell identity is 0), a cell#1 (the cell identity is 1) and a cell#2 (the cell identity is 2) as examples, a network device carries indication information through an RRC message.

An association relationship carried in the RRC message sent by the network device on the cell#0 to the terminal is table1-0, an association relationship carried in the RRC message sent by the network device on the cell#1 to the terminal is table1-1, and an association relationship carried in the RRC message sent by the network device on the cell#2 to the terminal is table1-2.

The association relationship included in the table1-0 is: a value of a carrier indicator field is 0 corresponding to a scheduling cell identity of 2.

The association relationship included in the table1-1 is: the value of the carrier indicator field is 1 corresponding to the scheduling cell identity of 0, and the value of the carrier indicator field is 2 corresponding to the scheduling cell identity of 0. Therefore, in a case where the value of the CIF in the multi-cell scheduling downlink control information sent by the network device to the terminal in the second cell with the cell identity 0 is 1, scheduling of a first cell (for example, the cell#1) may be implemented. In a case where the value of the CIF in the multi-cell scheduling downlink control information sent by the network device to the terminal in the second cell with the cell identity 0 is 2, the scheduling of the first cell (for example, the cell#1) may further be implemented. The value of the CIF may range from 0 to 7, and may further be adjusted as needed.

The association relationship included in the table1-2 is: the value of the carrier indicator field is 1 corresponding to the scheduling cell identity of 0, and the value of the carrier indicator field is 3 corresponding to the scheduling cell identity of 0. Therefore, in a case where the value of the CIF in the multi-cell scheduling downlink control information sent by the network device to the terminal in the second cell with the cell identity 0 is 1, the scheduling of the first cell (for example, the cell#2) may be implemented. In a case where the value of the CIF in the multi-cell scheduling downlink control information sent by the network device to the terminal in the second cell with the cell identity 2 is 3, the scheduling of the first cell (for example, the cell#2) may further be implemented.

Since the table1-0 is an association relationship received in the scheduling cell#0, and the multi-cell scheduling downlink control information received in the scheduling cell may be configured for self-scheduling, that is, the multi-cell scheduling downlink control information received on the cell#0 may be configured for scheduling the cell#0 itself, an association relationship corresponding to the cell#0, in addition to a corresponding relationship included in the table1-0, may further additionally include: the value of the carrier indicator field is 0 corresponding to the scheduling cell identity of 0, the value of the carrier indicator field is 1 corresponding to the scheduling cell identity of 0, the value of the carrier indicator field is 2 corresponding to the scheduling cell identity of 0, and the value of the carrier indicator field is 3 corresponding to the scheduling cell identity of 0.

It should be noted that, in a blank part in the table shown in FIG. 6, the value of the carrier indicator field and the scheduling cell identity may further be set, but this is not used in the example of the present embodiment and is therefore not shown. In addition, a numeric count of rows in the table is not limited to 4 as shown in the figure, and the numeric count of rows may be reduced or increased as needed.

According to the above association relationships, it may be determined that the multi-cell scheduling downlink control information may schedule the cell#0 in a case where the value of the carrier indicator field is 0 (00), the multi-cell scheduling downlink control information may schedule the cell#0, the cell#1, and the cell#2 in a case where the value of the carrier indicator field is 1 (01); the multi-cell scheduling downlink control information may schedule the cell#0 and the cell#1 in a case where the value of the carrier indicator field is 2 (10); and the multi-cell scheduling downlink control information may schedule the cell#0 and the cell#2 in a case where the value of the carrier indicator field is 3 (11). Accordingly, a relationship between the value of the carrier indicator field and the scheduled cell that may be determined by the terminal is shown in Table 1 below:

Table 1

| CIF | Cell group |
|-----|------------|
| 00  | {0}        |
| 01  | {0,1,2}    |
| 10  | {0,1}      |
| 11  | {0,2}      |

The cell group may be a cell group formed by cells corresponding to value of each carrier indicator field (it may also be indicated by value of other fields) in an association relationship indicated by the indication information received by each first cell. As shown in Table 1, a plurality of cell groups are {0}, {0,1,2}, {0,1} and {0,2}. For the convenience of the example, only a cell identity is recorded in a set.

It may be understood that each element in the table shown in all embodiments of the present disclosure exists independently. These elements are exemplarily listed in the same table, but it does not mean that all elements in the table must exist at the same time as shown in the table. A value of each element is independent of a value of any other element in the table. Therefore, those skilled in the art may understand that the value of each element in the table is an independent embodiment.

Since the cell group further has a cell group set to which it belongs, and the cell group set may correspond to the cell set, the terminal may further determine a target cell group to which the first cell belongs among the plurality of cell groups after determining the plurality of cell groups, and then determine a cell group set to which the target cell group belongs, as well as a cell set corresponding to the cell group set. It may then be determined that the first cell belongs to the cell set determined, that is, a cell set corresponding to the multi-cell scheduling downlink control information.

Cell groups in different cell group sets include different cells. For example, a cell group set#1 includes a cell group#1 and a cell group#2, and a cell group set#2 includes a cell group#3 and a cell group#4. Therefore, the cells included in the cell group#1 and the cell group#2 are different from the cells included in the cell group#3 and the cell group#4.

In an embodiment, determining the cell set corresponding to the cell group set includes: determining at least one cell group set according to the plurality of cell groups, in which a first cell group in a first cell group set includes at least the same cell as a second cell group in the first cell group set; and determining that the cells included in the cell groups in the cell group set in the at least one cell group set constitute a cell set.

After determining the plurality of cell groups, the terminal may determine the cell group set according to the plurality of cell groups, in which cell groups including the same cell may be classified into the same cell group set. For example, in a case where the first cell group and the second cell group include the same cell, the first cell group and the second cell group may be classified into the same cell group set, for example, into the first cell group set.

Then, a cell group including the same cell as any cell group in the first cell group set may be determined from other cell groups, and then the cell group determined may further be classified into the first cell group set. By analogy, the determination of the first cell group set may be completed. Further, other cell group sets are determined according to the manner for determining the first cell group set.

It should be noted that the first cell group and the second cell group in the same cell group set are different. The first cell group and the second cell group do not specifically refer to a certain cell, but are any cell group in one cell group set.

For example, the cell group set is determined by taking the following cell groups as examples: {0,1,2,3},{3},{5,6,7},{3,4,5,6},{8,9},{8}.

Any cell group may be considered first, for example, the cell group {0,1,2,3} may be considered first. It may be determined that the cell group {3} and the cell group {3,4,5,6} include the same cell#3 as the cell group {0,1,2,3}, and then the three cell groups {3}, {3,4,5,6} and {0,1,2,3} may be classified into the same cell group set, for example, referred to as the first cell group set.

Further, the cell group including the same cell as any cell group in the first cell group set is determined from other cell groups. It may be determined that the cell group {5,6,7} includes the same cell#5 and cell#6 as the cell group {3,4,5,6} in the first cell group, and then the cell group {5,6,7} may also be classified into the first cell group set.

Moreover, the cell groups {8,9} and {8} do not include the same cell as any cell group in the first cell group set, such that the second cell group set may be continuously determined after the first cell group set is determined. It may be determined, for example, that the second cell group set includes the cell sets {8,9} and {8}, in accordance with the manner described above.

For the cell group, for example, the indication information received on the cell#1, the cell#2, the cell#3, and the cell#4 includes a cell set identity of 1, and the indication information received on the cell#5, the cell#6, the cell#7, and the cell#8 includes a cell set identity of 2, the terminal determines that the cell#1, the cell#2, the cell#3, and the cell#4 belong to a cell set identified as 1 (a cell set ID=1), and determines that the cell#5, the cell#6, the cell#7, and the cell#8 belong to a cell set identified as 2 (a cell set ID=2).

Further, the multi-cell scheduling downlink control information received by a terminal in a scheduling cell may be configured to schedule the plurality of cells cell#1, cell#2, cell#3, and cell#4, and may further be configured to schedule the plurality of cells cell#2 and cell#3. Another multi-cell scheduling downlink control information received by the terminal in the scheduling cell may be configured to schedule the plurality of cells cell#5, cell#6, cell#7, and cell#8, and may further be configured to schedule the plurality of cells cell#6 and cell#7. Therefore, four cell groups {1,2,3,4}, {2,3}, {5,6,7,8}, {6,7} and two cell group sets {{1,2,3,4}, {2,3}}, {{5,6,7,8}, {6,7}} are determined. Different cell group sets may be determined by a cell scheduled by the multi-cell scheduling downlink control information sent by different cells.

In an embodiment, the manner for determining the cell set corresponding to the cell group set may be to determine the cells included in the cell groups in the cell group set, and further use a set formed by the cells determined as the cell set corresponding to the cell group set.

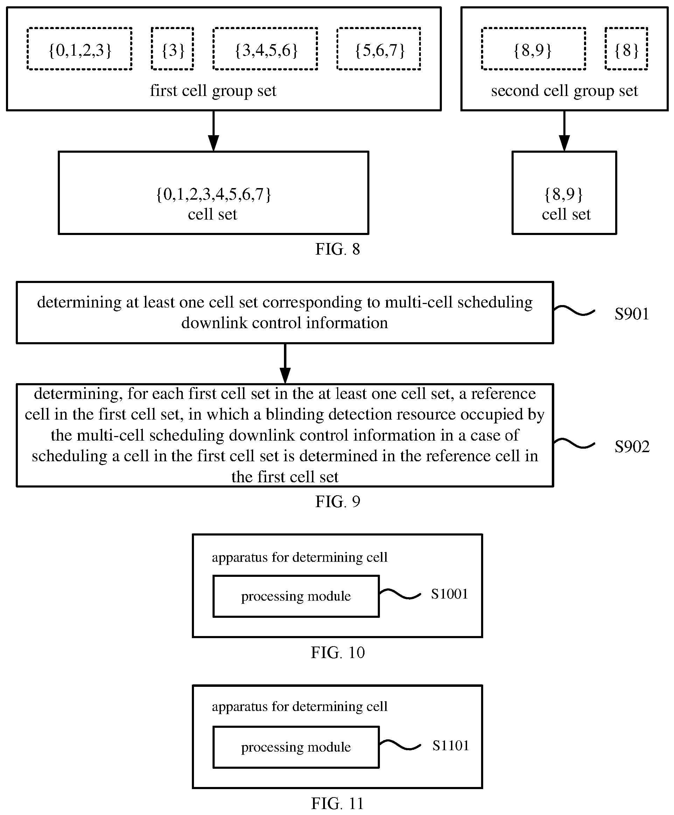

FIG. 8 is a schematic diagram illustrating another application scenario according to an embodiment of the present disclosure.

As shown in FIG. 8, taking a first cell group set and a second cell group set determined in the above embodiments as an example, the first cell group set is {{0,1,2,3},{3},{3,4,5,6},{5,6,7}}, and the second cell group set is {{8,9},{8}}.

It may be determined that cells included in the cell groups in the first cell group set are a cell#0, a cell#1, a cell#2, a cell#3, a cell#4, a cell#5, a cell#6, and a cell#7, then it may be determined that a cell set formed by these cells is {0,1,2,3,4,5,6,7}, that is, a cell set corresponding to the first cell group set is {0,1,2,3,4,5,6,7}. Similarly, it may be determined that a cell set corresponding to the second cell group set is {8,9}. Therefore, at least one cell set corresponding to multi-cell scheduling downlink control information includes the cell set {0,1,2,3,4,5,6,7} and the cell set {8,9}.

In an embodiment, determining the at least one cell set corresponding to the multi-cell scheduling downlink control information includes: receiving, in a first cell, indication information sent by a network device; determining a plurality of cell groups according to indication information received in a plurality of first cells; and determining a cell group to be a cell set.

A manner for determining a plurality of cell groups is similar to that in the above embodiments and will not be repeated here. The present embodiment is different from the above embodiments in that the cell group is directly determined as the cell set without determining a cell set to which the cell group belongs. For example, after determining Table 1 according to the indication information, the cell sets {0}, {0,1,2}, {0,1}, and {0,2} in Table 1 may be respectively regarded as cell sets. That is, the at least one cell set corresponding to the multi-cell scheduling downlink control information includes four sets {0}, {0,1,2}, {0,1}, and {0,2}.

FIG. 9 is a schematic flowchart illustrating a method for determining a cell according to an embodiment of the present disclosure. The method for determining the cell shown in the present embodiment may be performed by a network, and the network may communicate with the terminal. The network device includes but is not limited to network devices in 4G, 5G, 6G and other communication systems, such as a base station, a core network, and the like. The terminal includes but is not limited to communication devices such as a mobile phone, a tablet computer, a wearable device, a sensor, and an Internet of Things device.

As shown in FIG. 9, the method for determining the cell may include the following steps.

In step S901, at least one cell set corresponding to multi-cell scheduling downlink control information is determined.

In step S902, for each first cell set in the at least one cell set, a reference cell in the first cell set is determined, in which a blinding detection resource occupied by the multi-cell scheduling downlink control information in a case of scheduling a cell in the first cell set is determined in the reference cell in the first cell set.

In an embodiment, in a case where the at least one cell set includes a plurality of cell sets, the plurality of cell sets may include the same cell, or a plurality of cells may include no same cell.

In an embodiment, the multi-cell scheduling downlink control information may be simply referred to as MC-DCI, for example. The MC-DCI is configured to schedule a plurality of cells, specifically it may be configured to schedule data from the plurality of cells, such as scheduling a PUSCH, a PDSCH, and the like of one or more cells in the plurality of cells, thereby realizing scheduling of the plurality of cells through one DCI. Here, MC represents multi-cell.

In an embodiment, a format of the multi-cell scheduling downlink control information may be the same as a format of a traditional (legacy) DCI (e.g., a DCI format 0_0, a DCI format 0_1, etc.), or a newly defined format, e.g., a DCI format 0_3, a DCI format 1_3, etc. may be adopted.

In an embodiment, the multi-cell scheduling downlink control information may be scrambled by an RNTI, for example, may be scrambled by a C-RNTI, or may be scrambled by a newly defined RNTI.

Since the multi-cell scheduling downlink control information may be configured to schedule the plurality of cells, the multi-cell scheduling downlink control information will include relatively more information relative to a DCI configured to schedule a single cell in the legacy DCI, and the blinding detection resource occupied by the multi-cell scheduling downlink control information will also be relatively more. Although the terminal may receive the multi-cell scheduling downlink control information for scheduling the plurality of cells (scheduled cells) on a scheduling cell, it will be too burdensome for the scheduling cell in a case where all blinding detection resources occupied are determined based on the scheduling cell, which is not conducive to ensuring good blinding detection efficiency and blinding detection performance.

According to embodiments of the present disclosure, after determining the at least one cell set corresponding to the multi-cell scheduling downlink control information, the network device may determine, for each first cell set in the at least one cell set, the reference cell in the first cell set, and then determine the blinding detection resource occupied by the multi-cell scheduling downlink control information in the reference cell in the first cell set in a case where the multi-cell scheduling downlink control information schedules the cell in the first cell set.

For example, the at least one cell set includes a first cell set#1, a first cell set#2 and other cell sets, and a reference cell#1 in the set#1 and a reference cell#2 in the set#2 may be determined. Further, in a case where the multi-cell scheduling downlink control information is subsequently received, and it is determined that the multi-cell scheduling downlink control information is configured to schedule a plurality of cells in the set#1, the blinding detection resource occupied by the multi-cell scheduling downlink control information may be determined on the cell#1; or in a case where it is determined that the multi-cell scheduling downlink control information is configured to schedule a plurality of cells in the set#2, the blinding detection resource occupied by the multi-cell scheduling downlink control information may be determined on the cell#2.

The multi-cell scheduling downlink control information may schedule the plurality of cells, for example, schedule the plurality of cells in the first cell set. In this case, in the present embodiment, the reference cell in the first cell set may be determined to determine the blinding detection resource occupied by the multi-cell scheduling downlink control information in the reference cell in a case of scheduling the cell in the first cell set, which is conducive to ensuring the blinding detection efficiency and blinding detection performance of the terminal for the downlink control information.

After determining the reference cell in the first cell set, the terminal may determine the blinding detection resource occupied by the multi-cell scheduling downlink control information in the reference cell in the first cell set in a case of scheduling the cell in the first cell set. In a case where the blinding detection resource determined exceeds the blinding detection capability, the terminal may drop a part of the blinding detection resource corresponding to the DCI configured, and do not perform blinding detection of the DCI on the dropped part of the blinding detection resource.

The network device determines the reference cell in the first cell set, and determines the blinding detection resource occupied by the multi-cell scheduling downlink control information in the reference cell in the first cell set in a case of scheduling the cell in the first cell set, and further determines the blinding detection resource that may be dropped by the terminal, which is conducive to improving flexibility and effectiveness of scheduling.

After determining the reference cell, the network device may determine a configuration of an SS and/or a configuration of a CORESET corresponding to the multi-cell scheduling downlink control information configured to the reference cell, and may further determine the blinding detection resource occupied by the multi-cell scheduling downlink control information according to the configuration of the SS and/or the configuration of the CORESET, for example, determine a time domain resource and a frequency domain resource for blindly detecting the multi-cell scheduling downlink control information, and then calculate a blinding detection resource occupied by all DCIs (for example, the multi-cell scheduling downlink control information and the legacy DCI) including the multi-cell scheduling downlink control information on a slot or a span for blindly detecting the multi-cell scheduling downlink control information.

It should be noted that the reference cell in the first cell set may be one cell or the plurality of cells. These two situations will be described below with examples.

In an embodiment, the blinding detection resource includes at least one of:

PDCCH candidates; or
a CCE.

Determining the blinding detection resource refers to determining a numeric count of blinding detection resources. For example, for the above two kinds of blinding detection resources, it refers to determining a numeric count of at least one blinding detection resource in the PDCCH candidates and the CCE occupied within a certain time domain range, for example, a slot range or a PDCCH span range. It should be noted that the blinding detection resources determined in the present disclosure are not limited to the PDCCH candidates and the CCE above-mentioned, and other blinding detection resources may also be determined as needed. For example, the blinding detection resources determined may include BD, in which the BD refers to a numeric count of PDCCH candidates occupied over a period of time.

The manner for determining the reference cell in the first cell set is illustratively described below by several embodiments. The manner for determining the reference cell in the first cell set may be determined according to a predefined rule (for example, a protocol agreement) or may be determined according to an indication of a network device, which is not limited in the present disclosure.

In an embodiment, determining the reference cell in the first cell set includes: determining the reference cell in the first cell set according to a cell identity.

In an embodiment, in a case of determining the reference cell in the first cell set, a cell ID of each cell in the first cell set may be determined first, and then the reference cell may be selected among the cells included in the first cell set according to the cell ID of each cell.

In an embodiment, determining the reference cell in the first cell set according to the cell identity includes: determining a cell having a maximum cell identity or a cell having a minimum cell identity in the first cell set as the reference cell in the first cell set in a case where the reference cell in the first cell set includes one cell; or determining a plurality of cells in the first cell set in a descending order of the cell identities or a plurality of cells in the first cell set in an ascending order of the cell identities as the reference cell in the first cell set in a case where the reference cell in the first cell set includes a plurality of cells.

In an embodiment, in a case where the reference cell in the first cell set includes one cell, determining the reference cell in the first cell set according to the cell identity includes that the cell having the maximum cell identity or the cell having the minimum cell identity may be determined as the reference cell in the first cell set.

For example, the first cell set includes a cell#1 (the cell ID is 1), a cell#2 (the cell ID is 2), a cell#3 (the cell ID is 3), and a cell#4 (the cell ID is 4). In a case where the cell having the maximum cell identity is determined as the reference cell in the first cell set, the cell#4 may be determined as the reference cell in the first cell set. In a case where the cell having the minimum cell identity is determined as the reference cell in the first cell set, the cell#1 may be determined as the reference cell in the first cell set.

In an embodiment, in a case where the reference cell in the first cell set includes the plurality of cells, determining the reference cell in the first cell set according to the cell identity includes that the plurality of cells in the first cell set in a descending order of the cell identities or the plurality of cells in the first cell set in an ascending order of the cell identities may be determined as the reference cell in the first cell set.

For example, the first cell set includes the cell#1 (the cell ID is 1), the cell#2 (the cell ID is 2), the cell#3 (the cell ID is 3), and the cell#4 (the cell ID is 4), and a numeric count of the reference cells is 2. In a case where the cell having the maximum cell identity is determined as the reference cell in the first cell set, the cell#4 and the cell#3 may be determined as the reference cells in the first cell set. In a case where the cell having the minimum cell identity is determined as the reference cell in the first cell set, the cell#1 and the cell#2 may be determined as the reference cells in the first cell set.

In an embodiment, the cell in the first cell set may be sorted in a first order (e.g. determined according to a predefined rule or determined according to a network indication), and then the reference cell in the first cell set may be determined according to a sorting number of the cells. For example, the first order includes, but is not limited to, a descending order and an ascending order of the cell identities.

Still taking the first cell set including four cells, the cell#1, the cell#2, the cell#3, and the cell#4 as an example. For example, the first order is a descending order of the cell IDs, and a sorting result is the cell#4, the cell#3, the cell#2, and the cell #1. For example, a cell with a sorting number 3 is determined as the reference cell in the first cell set, it is known that the cell#2 is a cell with the sorting number 3, and the cell#2 may be determined as the reference cell in the first cell set.

In an embodiment, determining the reference cell in the first cell set includes: determining the reference cell in the first cell set according to a blinding detection resource occupied by a DCI configured in each cell in the first cell set.

In an embodiment, in a case of determining the reference cell in the first cell set, the blinding detection resource occupied by the DCI configured in each cell in the first cell set may be determined first, and then the reference cell in the first cell set may be determined according to the blinding detection resource occupied by the DCI configured in each cell in the first cell set.

In an embodiment, determining the reference cell in the first cell set according to the blinding detection resource occupied by the DCI configured in each cell in the first cell set includes: determining a cell having fewest blinding detection resources occupied by the DCI in the first cell set as the reference cell in the first cell set in a case where the reference cell in the first cell set includes one cell; or determining a plurality of cells in the first cell set in an ascending order of blinding detection resources occupied by the DCI (a DCI configured in each cell in the first cell set) as the reference cell in the first cell set in a case where the reference cell in the first cell set includes the plurality of cells.

The blinding detection resource occupied by the DCI configured in each cell may be a blinding detection resource occupied by a legacy DCI configured in each cell, or may be a blinding detection resource occupied by all DCIs configured in each cell (including, for example, the legacy DCI and multi-cell scheduling downlink control information).

In an embodiment, taking the blinding detection resource occupied by the legacy DCI configured in each cell as an example, since the more blinding detection resources are occupied by the legacy DCI configured for the cell, the fewer blinding detection resources are occupied by the multi-cell scheduling downlink control information under a condition that the blinding detection resource corresponding to the DCI configured for the cell is constant. Therefore, in a case where the reference cell in the first cell set includes one cell, the blinding detection resource occupied by the legacy DCI configured in each cell in the first cell set may be determined first, and then the cell having fewest blinding detection resources occupied by the legacy DCI may be determined as the reference cell in the first cell set. Accordingly, it is conducive to ensuring the blinding detection capability of the terminal in the reference cell for the multi-cell scheduling downlink control information.

In an embodiment, taking the blinding detection resources occupied by all DCIs configured in each cell as an example, since the fewer blinding detection resources are occupied by all DCIs configured for the cell, the blinding detection complexity of the terminal will be relatively lower. Therefore, in a case where the reference cell in the first cell set includes one cell, the blinding detection resource occupied by all DCIs configured in each cell in the first cell set may be determined first, and then the cell having fewest blinding detection resources occupied by all DCIs may be determined as the reference cell in the first cell set. Accordingly, it is conducive to reducing the blinding detection complexity of the terminal in the reference cell.

For example, in a case where the first cell set includes a cell#1, a cell#2, a cell#3, and a cell#4, the blinding detection resource occupied by the DCI configured for each cell may be determined for these four cells. For example, the blinding detection resource occupied by the DCI configured for the cell#1 is R1, the blinding detection resource occupied by the DCI configured for the cell#2 is R2, the blinding detection resource occupied by the DCI configured for the cell#3 is R3, and the blinding detection resource occupied by the DCI configured for the cell#4 is R4. An ascending order of the four blinding detection resources is R2, R3, R4, and R1. That is, in a case where the fewest blinding detection resource R2 is occupied by the DCI configured on the cell#2, the cell#2 may be selected as the reference cell for determining the blinding detection resource occupied by the multi-cell scheduling downlink control information.

It should be noted that, in embodiments of the present disclosure, for a certain cell, determining the blinding detection resource occupied by the DCI configured for the cell includes, but is not limited to, the following two manners.

Manner 1: a search space configured for the cell is determined, and all blinding detection resources (e.g., PDCCH candidates) of the DCI configured in the search space are summed.

Manner 2: a search space configured for the cell is determined, and blinding detection resources corresponding to DCIs within a specific time unit in the search space are summed. The specific time unit may be one or more frames, and/or one or more subframes, and/or one or more slots, and/or one or more symbols, and/or one or more PDCCH spans, which may be specified by a predefined rule or indicated by a network device.

In an embodiment, taking the blinding detection resource occupied by the legacy DCI configured in each cell as an example, the more blinding detection resources are occupied by the legacy DCI configured for the cell, the fewer blinding detection resources are occupied by the multi-cell scheduling downlink control information. Therefore, in a case where the reference cell in the first cell set includes the plurality of cell, the blinding detection resource occupied by the legacy DCI configured in each cell in the first cell set may be determined first, and then the plurality of cells in the first cell set may be determined as the reference cell in the first cell set in an ascending order of the blinding detection resources occupied by the legacy DCI. Accordingly, it is conducive to ensuring the blinding detection capability of the terminal in the reference cell for the multi-cell scheduling downlink control information.

In an embodiment, taking the blinding detection resources occupied by all DCIs configured in each cell as an example, since the fewer blinding detection resources are occupied by all DCIs configured for the cell, the blinding detection complexity of the terminal will be relatively lower. Therefore, in a case where the reference cell in the first cell set includes the plurality of cell, the blinding detection resource occupied by all DCIs configured in each cell in the first cell set may be determined first, and then the plurality of cells in the first cell set may be determined as the reference cell in the first cell set in an ascending order of the blinding detection resources occupied by all DCIs. Accordingly, it is conducive to ensuring the blinding detection capability of the terminal in the reference cell for the multi-cell scheduling downlink control information.

For example, a numeric count of the reference cells is 2, the first cell set includes the cell#1, the cell#2, the cell#3, and the cell#4, and the blinding detection resource occupied by the DCI configured for each cell may be determined for these four cells. For example, the blinding detection resource occupied by the DCI configured for the cell#1 is R1, the blinding detection resource occupied by the DCI configured for the cell#2 is R2, the blinding detection resource occupied by the DCI configured for the cell#3 is R3, and the blinding detection resource occupied by the DCI configured for the cell#4 is R4. An ascending order of the four blinding detection resources is R2, R3, R4, and R1. That is, the fewest blinding detection resource R2 is occupied by the DCI configured on the cell#2, followed by the blinding detection resource R3 occupied by the DCI configured on the cell#3. Therefore, the cell#2 and the cell#3 may be selected as the reference cell for determining the blinding detection resource occupied by the multi-cell scheduling downlink control information. Determination of the blinding detection resource occupied by the DCI configured in the cell has been introduced above and will not be repeated here.

In an embodiment, the DCI includes at least one of: a traditional DCI; or all DCIs configured in the cell.

In an embodiment, determining the reference cell in the first cell set includes: determining a cell in the first cell set configured to determine a multi-cell scheduling downlink control information size budget as the reference cell in the first cell set.

In an embodiment, in a case where the multi-cell scheduling downlink control information schedules a plurality of cells in the first cell set, the multi-cell scheduling downlink control information size (that is, a numeric count of bits occupied) budget may be determined by at least one cell in the plurality of cells. The at least one cell specifically aligns a size of a DCI (a DCI including the multi-cell scheduling downlink control information).

Therefore, in a case of selecting the reference cell, at least one cell configured to determine the multi-cell scheduling downlink control information size budget may be selected as the reference cell. Therefore, in a process of scheduling the plurality of cells by the multi-cell scheduling downlink control information, a determination operation that needs to be performed by the scheduled cell may be concentrated on one cell, which is conducive to simplifying the configuration logic for the cell.

In an embodiment, determining a cell in the first cell set configured with a search space corresponding to the multi-cell scheduling downlink control information as the reference cell in the first cell set.

In an embodiment, in a case of determining the reference cell in the first cell set, the search space corresponding to the multi-cell scheduling downlink control information for scheduling the cell in the first cell set may be determined first, and then a cell configured with the search space corresponding to the multi-cell scheduling downlink control information is determined as the reference cell from the cell included in the first cell set. For example, in a case where the search space is SS#1, that is, the SS identified as 1, a cell (which may be one or more cells) configured with the SS identified as 1 may be determined as the reference cell from the cell included in the first cell set.

It should be noted that the above-described several embodiments for determining the reference cell in the first cell set may be implemented separately or may be combined as needed. For example, a cell configured with the search space corresponding to the multi-cell scheduling downlink control information may be determined from the first cell set. In a case where the plurality of cells are determined, a cell having fewest blinding detection resources occupied by a DCI may be further determined as the reference cell from the plurality of cells.

In an embodiment, in a case where the reference cell in the first cell set includes a plurality of cells, determining the blinding detection resource occupied by the multi-cell scheduling downlink control information in the reference cell in the first cell set in a case of scheduling the cell in the first cell set includes: determining the blinding detection resource occupied by the multi-cell scheduling downlink control information on each cell in the reference cell in the first cell set.

In an embodiment, in a case where the reference cell includes the plurality of cells, the blinding detection resource occupied by the multi-cell scheduling downlink control information may be determined on each cell of the plurality of cells.

Taking the first cell set including a cell#1, a cell#2, a cell#3, and a cell#4 as an example.

In a case where the reference cells determined are the cell#1 and the cell#2, the blinding detection resource occupied by the multi-cell scheduling downlink control information may be determined on the cell#1, and the blinding detection resource occupied by the multi-cell scheduling downlink control information may be determined on the cell#2.

In a case where all cells in the first cell set are determined as the reference cells, the blinding detection resource occupied by the multi-cell scheduling downlink control information may be determined on the cell#1, the blinding detection resource occupied by the multi-cell scheduling downlink control information may be determined on the cell#2, the blinding detection resource occupied by the multi-cell scheduling downlink control information may be determined on the cell#3, and the blinding detection resource occupied by the multi-cell scheduling downlink control information may be determined on the cell#4.

In an embodiment, determining the blinding detection resource occupied by the multi-cell scheduling downlink control information on each cell in the reference cell in the first cell set includes: determining the blinding detection resource according to a determination result and a quantization coefficient on each cell.

In a case of determining the blinding detection resource occupied by the multi-cell scheduling downlink control information on each cell in the reference cell in the first cell set, the determination result on each cell (that is, the blinding detection resource determined) may be processed with the quantization coefficient (for example, multiplication, division, addition, subtraction, square root, logarithm, and the like of the determination result according to the quantization coefficient) as a final blinding detection resource. For example, a determination result on a certain cell may be multiplied by the quantization coefficient as the blinding detection resource finally determined on this cell.

In an embodiment, the quantization coefficient is determined according to a numeric count of a plurality of cells included in the reference cell (for example, all cells or part of cells in the first cell set). For example, the quantization coefficient may be 1/K of the numeric count of cells included in the reference cell, where K represents a numeric count of cells included in the reference cell. Accordingly, it is conducive to reducing the overall burden for determining the blinding detection resource occupied by the multi-cell scheduling downlink control information on the plurality of cells.

Taking the first cell set including a cell#1, a cell#2, a cell#3, and a cell#4 as an example.

In a case where the reference cells determined are the cell#1 and the cell#2, the quantization coefficient is 1/2. A determination result A of the blinding detection resource occupied by the multi-cell scheduling downlink control information determined on the cell#1 may be multiplied by 1/2 to obtain A/2 as the blinding detection resource occupied by the multi-cell scheduling downlink control information determined on the cell#1. A determination result B obtained by determining the blinding detection resource occupied by the multi-cell scheduling downlink control information on the cell#2 may be multiplied by 1/2 to obtain B/2 as the blinding detection resource occupied by the multi-cell scheduling downlink control information determined on the cell#1.

In a case where the reference cells determined are the cell#1, the cell#2, the cell#3, and the cell#4, the quantization coefficient is 1/4. The determination result A of the blinding detection resource occupied by the multi-cell scheduling downlink control information determined on the cell#1 may be multiplied by 1/4 to obtain A/4 as the blinding detection resource occupied by the multi-cell scheduling downlink control information determined on the cell#1. The determination result B obtained by determining the blinding detection resource occupied by the multi-cell scheduling downlink control information on the cell#2 may be multiplied by 1/4 to obtain B/4 as the blinding detection resource occupied by the multi-cell scheduling downlink control information determined on the cell#1. A determination result C of the blinding detection resource occupied by the multi-cell scheduling downlink control information determined on the cell#3 may be multiplied by 1/4 to obtain C/4 as the blinding detection resource occupied by the multi-cell scheduling downlink control information determined on the cell#3. A determination result D obtained by determining the blinding detection resource occupied by the multi-cell scheduling downlink control information on the cell#4 may be multiplied by 1/4 to obtain D/4 as the blinding detection resource occupied by the multi-cell scheduling downlink control information determined on the cell#4.

In an embodiment, the blinding detection resource occupied by the multi-cell scheduling downlink control information in a case of scheduling a cell in each first cell set in a plurality of first cell sets is determined on the same reference cell in a case where the at least one cell set includes a plurality of cell sets and an intersection cell exists among the plurality of cell sets, and the plurality of first cell sets include the same reference cell.

In an embodiment, in a case where the at least one cell set includes the plurality of cell sets, the intersection cell may exist among the plurality of cell sets (including the same cell), or no intersection cell exists among the plurality of cell sets (not including the same cell).

Taking two cell sets as an example.

In a case where the cell set#1 is {cell#1, cell#2, cell#3}, and the cell set#2 is {cell#1, cell#4, cell#5}, an intersection {cell#1} exists between the set#1 and the set#2, and the intersection cell is the cell#1.

In a case where the cell set#1 is {cell#1, cell#2, cell#3}, and the cell set#3 is {cell#4, cell#5, cell#6}, no intersection exists between the set#1 and the set#3.

In a case where the intersection cell exists among the plurality of cell sets, the same reference cell may be determined in a case where the reference cell is determined for each first cell set in the plurality of cell sets. In this case, the blinding detection resource occupied by the multi-cell scheduling downlink control information in a case of scheduling the cell in each first cell set whose intersection is the same reference cell may be determined on the same reference cell. In this case, the blinding detection resource occupied by the multi-cell scheduling downlink control information determined on the same reference cell is a sum of the blinding detection resource occupied by the multi-cell scheduling downlink control information determined for each first cell set.

For example, in a case where the reference cell in the set#1 is determined as the cell#1, and the reference cell in the set#2 is determined also as the cell#1, the cell#1 is the same reference cell. Therefore, the blinding detection resource occupied by the multi-cell scheduling downlink control information in a case of scheduling the plurality of cells by the multi-cell scheduling downlink control information in the set#1 is determined on the cell#1, for example, A, and the blinding detection resource occupied by the multi-cell scheduling downlink control information in a case of scheduling the plurality of cells by the multi-cell scheduling downlink control information in the set#2 is determined on the cell#1, for example, B. Therefore, the blinding detection resource occupied by the multi-cell scheduling downlink control information determined on the cell#1 is a sum of A and B.

It should be noted that, in embodiments of the present disclosure, for a certain cell, determining the blinding detection resource occupied by the multi-cell scheduling downlink control information configured for the cell includes, but is not limited to, the following two manners.

Manner 1: a search space configured for the cell is determined, and all blinding detection resources (e.g., PDCCH candidates) of the multi-cell scheduling downlink control information in the search space are summed.

Manner 2: a search space configured for the cell is determined, and blinding detection resources of the multi-cell scheduling downlink control information within a specific time unit in the search space are summed. The specific time unit may be one or more frames, and/or one or more subframes, and/or one or more slots, and/or one or more symbols, which may be specified by a predefined rule or indicated by the network device.

In an embodiment, in a case where the at least one cell set includes the plurality of cell sets and the intersection cell exists among the plurality of cell sets, determining, for each first cell set in the at least one cell set, the reference cell in the first cell set includes: determining, for each first cell set in a plurality of first cell sets, the reference cell in the first cell set, in which the reference cell is different in each first cell set.

In an embodiment, according to the above embodiments, in a case where the at least one cell set includes the plurality of cell sets and the intersection cell exists among the plurality of cell sets, the same reference cell may be determined in a case where the reference cell is determined for each first cell set in the at least one cell set. Then it is necessary to determine the blinding detection resource occupied by the multi-cell scheduling downlink control information on the same reference cell in a case of scheduling the cell in each first cell set whose intersection is the same reference cell. Although it is conducive to simplifying the configuration logic, it has a heavy determination burden for the same reference cell.

Therefore, from the perspective of determination burden of the cell, in the present embodiment, in a case where the at least one cell set includes the plurality of cell sets and the intersection cell exists among the plurality of cell sets, different reference cells may be determined in individual first cell sets, thereby avoiding excessive determination burden on a certain reference cell.

For example, for the plurality of cell sets:

First, a sorting manner (which may be referred to as a priority) of the cell sets may be defined, for example, sorting the cell sets in an ascending order according to the cell set identity (ID), or sorting the cell sets in a descending order according to the cell set identity, or sorting the cell sets in a descending order according to the blinding detection resource occupied by the DCI configured for one or more cells in each cell set, or sorting the cell sets in an ascending order according to the blinding detection resources occupied by the DCI configured for one or more cells in each cell set. The following description mainly takes sorting the cell sets in an ascending order according to the cell set identity as an example.

Second, for a set n (identified as n) after sorting, cells included in the set n are determined, and the reference cell corresponding to all sets m (which may be one or more cells) with an identity less than n is determined, in which the blinding detection resource occupied by the multi-cell scheduling downlink control information may be determined in the reference cell in a case of scheduling a plurality of cells in the set m by the MC DCI.

Then, a second cell set corresponding to the cell set n is determined. In a case where the reference cell in the set m belongs to the cell set n, the second cell set is re-determined, and the second cell set does not include the reference cell. That is, the second cell set is equal to a cell range after all cells included in the set n exclude the reference cell belonging to the set n (which may be a reference cell determined in the set m).

Final, the reference cell is determined (refer to the above embodiments) among the cells included in the second cell set, and the reference cell determined is configured to determine the blinding detection resources occupied by the multi-cell scheduling downlink control information in a case of scheduling the plurality of cells in the set n by the multi-cell scheduling downlink control information.

Taking determination of the reference cell according to the cell ID as an example, the above process is represented by pseudo code as follows:

determining a first cell set index $\gamma(j)$, in which $\gamma(j)$ gradually increases as j (j=0, 1, 2, ...) increases;
initial $\gamma(0)$, which defines a set $\vartheta=\varnothing$ corresponding to the reference cell;
while j≤N (N is a numeric count of sets in at least one cell set corresponding to the multi-cell scheduling downlink control information);
1 determining a minimum cell identity $n_j$ in all cells corresponding to the set $\gamma(j)$;
if $n_j \notin \vartheta$;
determining that a cell $n_j$ is a reference cell for determining the blinding detection resources occupied by the MC DCI in a case of scheduling the plurality of cells in the set $\gamma(j)$;
break;

$$\vartheta=\vartheta\cup n_j;$$

else;

$$\gamma(j)= \gamma(j)\backslash n_j;$$

return 1;

$$j = j + 1.$$

Taking three first cell sets as an example, the first cell set includes the set#1 as {Cell#1, Cell#2, Cell#3}, the set#2 as {Cell#1, Cell#2, Cell#4}, and the set#3 as {Cell#3, Cell#4, Cell#5}. The cell sets are sorted in an ascending order of the cell identities as the set#1, the set#2, and the set#3. For example, the reference cell is determined by determining a cell having the minimum cell identity in the first cell set as the reference cell.

First, the reference cell is determined in the set#1 (that is, a cell set corresponding to $\gamma(1)$), and the cell corresponding to the minimum cell ID in the first cell set is taken as an example. For example, in a case where the reference cell in the set#1 is determined as the cell#1, the cell#1 belongs to a set $\vartheta$.

Further, the reference cell is determined in the set#2 (that is, a cell set corresponding to $\gamma(2)$). Since the cell#1 in the set#2 belongs to the set $\vartheta$, the set#2 is redefined as a set of all other remaining cells after excluding the cell#1, that is, the set#2 is redefined as {Cell#2, Cell#4}. The cell#2 having the minimum cell identity is selected in the set#2, and the cell#2 does not belong to the set $\vartheta$, then the cell#2 is used as the reference cell in the set#2, and the set $\vartheta$ is redefined such that the cell#2 belongs to the set $\vartheta$.

Next, the reference cell is determined in the set#3 (that is, a cell set corresponding to $\gamma(3)$). Considering that the cell belonging to the set $\vartheta$ is not included in the set#3, it is determined that the cell corresponding to the minimum cell ID in the set#3 is the cell#3. Since the cell#3 does not belong to the set $\vartheta$, the cell#3 may be used as the reference cell in the set#3, and the set $\vartheta$ is redefined such that the cell#2 belongs to the set $\vartheta$.

Accordingly, the reference cells in each of the first cell sets may be determined for the above three first cell sets, and it may be ensured that the reference cells in individual first cell sets are different.

A manner for determining at least one cell set corresponding to the multi-cell scheduling downlink control information will be exemplarily below described with reference to several embodiments.

In an embodiment, determining the at least one cell set corresponding to the multi-cell scheduling downlink control information includes:

> determining a configuration parameter for each cell in the plurality of cells (e.g., cells that may be scheduled by the multi-cell scheduling downlink control information); and
> determining that a cell having the same configuration parameter belongs to a cell set corresponding to the multi-cell scheduling downlink control information.

Taking four cells, the cell#1, the cell#2, the cell#3, and the cell#4, and the configuration parameter including the CIF as an example, the CIF configured for each of the four cells may be determined (for example, determined according to a radio resource control (RRC) signaling). For example, in a case where the CIF configured for the cell#1 is 01, the CIF configured for the cell#2 is 01, the CIF configured for the cell#3 is 02, and the CIF configured for the cell#4 is 02, it is determined that the cell#1 and the cell#2 have the same CIF, and the cell#3 and the cell#4 have the same CIF. Therefore, the cell#1 and the cell#2 are classified into a cell set {Cell#1, Cell#2} corresponding to the multi-cell scheduling downlink control information, and the cell#3 and the cell#4 are classified into another cell set {Cell#3, Cell#4} corresponding to the multi-cell scheduling downlink control information.

In an embodiment, determining the at least one cell set corresponding to the multi-cell scheduling downlink control information includes: receiving, in a first cell, indication information sent by the network device; determining a plurality of cell groups according to the indication information received in a plurality of first cells; determining a target cell group to which the first cell belongs among a plurality of cell groups, and a cell group set to which the target cell group belongs; and determining a cell set corresponding to the cell group set.

In an embodiment, the network device may send the indication information to the terminal in the plurality of first cells, in which the indication information may indicate an association relationship between a value of the CIF corresponding to the first cell where the indication information is sent and a scheduling cell identity, and the network device may determine the plurality of cell groups according to an association relationship corresponding to each first cell. The association relationship may specifically be an association relationship between the value of the carrier indicator field in a scheduling cell (*cif-InScheduingCell*) and the scheduling cell identity.

The role of the association relationship has been described in the above embodiments corresponding to the terminal and will not be repeated here. The manner in which the network device determines the plurality of cell groups corresponds to the manner in which the terminal determines the plurality of cells. The network device may determine the plurality of cell groups before sending the indication information and indicate the terminal through the indication information, while the terminal may determine the plurality of cells only after receiving the indication information. Furthermore, the manner in which the network device determines the at least one cell set corresponding to the multi-cell scheduling downlink control information also corresponds to the terminal embodiment, and will not be repeated here.

Corresponding to the above embodiments of the method for determining the cell, the present disclosure further provides embodiments of an apparatus for determining the cell.

FIG. 10 is a schematic block diagram illustrating an apparatus for determining a cell according to an embodiment of the present disclosure. The apparatus for determining the cell shown in the present embodiment may be a terminal, or a device formed by modules in a terminal. The terminal includes but is not limited to communication devices such as a mobile phone, a tablet computer, a wearable device, a sensor, and an Internet of Things device. The terminal may communicate with a network device, and the network device includes but is not limited to network devices in 4G, 5G, 6G and other communication systems, such as a base station, a core network, and the like.

As shown in FIG. 10, the apparatus for determining the cell includes:

a processing module 1001 configured to determine at least one cell set corresponding to multi-cell scheduling downlink control information; and determine, for each first cell set in the at least one cell set, a reference cell in the first cell set, in which a blinding detection resource occupied by the multi-cell scheduling downlink control information in a case of scheduling a cell in the first cell set is determined in the reference cell in the first cell set.

In an embodiment, the processing module is configured to determine the reference cell in the first cell set according to a cell identity.

In an embodiment, the processing module is configured to determine a cell having a maximum cell identity or a cell having a minimum cell identity in the first cell set as the reference cell in the first cell set in a case where the reference cell in the first cell set includes one cell; or determine a plurality of cells in the first cell set in a descending order of the cell identities or a plurality of cells in the first cell set in an ascending order of the cell identities as the reference cell in the first cell set in a case where the reference cell in the first cell set includes the plurality of cells.

In an embodiment, the processing module is configured to determine the reference cell in the first cell set according to the blinding detection resource occupied by a DCI configured in each cell in the first cell set.

In an embodiment, the processing module is configured to determine a cell having fewest blinding detection resources occupied by the DCI in the first cell set as the reference cell in the first cell set in a case where the reference cell in the first cell set includes one cell; or determine the plurality of cells in the first cell set in an ascending order of blinding detection resources occupied by the DCI as the reference cell in the first cell set in a case where the reference cell in the first cell set includes the plurality of cells.

In an embodiment, the DCI includes at least one of: a traditional DCI; or all DCIs configured in the cell.

In an embodiment, the processing module is configured to determine a cell in the first cell set configured to determine a multi-cell scheduling downlink control information size budget as the reference cell in the first cell set.

In an embodiment, in a case where the reference cell in the first cell set includes the plurality of cells, the processing module is configured to determine the blinding detection resource occupied by the multi-cell scheduling downlink control information on each cell in the reference cell in the first cell set.

In an embodiment, the processing module is configured to determine the blinding detection resource according to a determination result and a quantization coefficient on each cell.

In an embodiment, the quantization coefficient is determined according to a numeric count of the plurality of cells included by the reference cell.

In an embodiment, the processing module is configured to determine a cell in the first cell set configured with a search space corresponding to the multi-cell scheduling downlink control information as the reference cell in the first cell set.

In an embodiment, the blinding detection resource occupied by the multi-cell scheduling downlink control information in a case of scheduling a cell in each first cell set in a plurality of first cell sets is determined on the same reference cell in a case where the at least one cell set includes a plurality of cell sets and an intersection cell exists among the plurality of cell sets, and the plurality of first cell sets include the same reference cell.

In an embodiment, in a case where the at least one cell set includes the plurality of cell sets and an intersection cell exists among the plurality of cell sets, the processing module is configured to determine, for each first cell set in the plurality of first cell sets, the reference cell in the first cell set, in which the reference cell is different in each first cell set.

In an embodiment, the blinding detection resource includes at least one of: PDCCH candidates; or a CCE.

In an embodiment, the processing module is configured to receive, in a first cell, indication information sent by the network device; determine a plurality of cell groups according to the indication information received in a plurality of first cells; determine a target cell group to which the first cell belongs among the plurality of cell groups, and a cell group set to which the target cell group belongs; and determine a cell set corresponding to the cell group set.

FIG. 11 is a schematic block diagram illustrating an apparatus for determining a cell according to an embodiment of the present disclosure. The apparatus for determining the cell shown in the present embodiment may be a network device, or a device formed by modules in a network device. The network device may communicate with a terminal. The terminal includes but is not limited to communication devices such as a mobile phone, a tablet computer, a wearable device, a sensor, and an Internet of Things device. The network device includes but is not limited to network devices in 4G, 5G, 6G and other communication systems, such as a base station, a core network, and the like.

As shown in FIG. 11, the apparatus for determining the cell includes:

a processing module 1101 configured to determine at least one cell set corresponding to multi-cell scheduling downlink control information; and determine, for each first cell set in the at least one cell set, a reference cell in the first cell set, in which a blinding detection resource occupied by the multi-cell scheduling downlink control information in a case of scheduling a cell in the first cell set is determined in the reference cell in the first cell set.

In an embodiment, the processing module is configured to determine the reference cell in the first cell set according to a cell identity.

In an embodiment, the processing module is configured to determine a cell having a maximum cell identity or a cell having a minimum cell identity in the first cell set as the reference cell in the first cell set in a case where the reference cell in the first cell set includes one cell; or determine a plurality of cells in the first cell set in a descending order of the cell identities or a plurality of cells in the first cell set in an ascending order of the cell identities as the reference cell in the first cell set in a case where the reference cell in the first cell set includes the plurality of cells.

In an embodiment, the processing module is configured to determine the reference cell in the first cell set according to the blinding detection resource occupied by a DCI configured in each cell in the first cell set.

In an embodiment, the processing module is configured to determine a cell having fewest blinding detection resources occupied by the DCI in the first cell set as the reference cell in the first cell set in a case where the reference cell in the first cell set includes one cell; or determine the plurality of cells in the first cell set in an ascending order of blinding detection resources occupied by the DCI as the reference cell in the first cell set in a case where the reference cell in the first cell set includes the plurality of cells.

In an embodiment, the DCI includes at least one of: a traditional DCI; or all DCIs configured in the cell.

In an embodiment, the processing module is configured to determine a cell in the first cell set configured to determine a multi-cell scheduling downlink control information size budget as the reference cell in the first cell set.

In an embodiment, in a case where the reference cell in the first cell set includes the plurality of cells, the processing module is configured to determine the blinding detection resource occupied by the multi-cell scheduling downlink control information on each cell in the reference cell in the first cell set.

In an embodiment, the processing module is configured to determine the blinding detection resource according to a determination result and a quantization coefficient on each cell.

In an embodiment, the quantization coefficient is determined according to a numeric count of the plurality of cells included by the reference cell.

In an embodiment, the processing module is configured to determine the cell in the first cell set configured with a search space corresponding to the multi-cell scheduling downlink control information as the reference cell in the first cell set.

In an embodiment, the blinding detection resource occupied by the multi-cell scheduling downlink control information in a case of scheduling a cell in each first cell set in a plurality of first cell sets is determined on the same reference cell in a case where the at least one cell set includes a plurality of cell sets and an intersection cell exists among the plurality of cell sets, and the plurality of first cell sets include the same reference cell.

In an embodiment, in a case where the at least one cell set includes the plurality of cell sets and an intersection cell exists among the plurality of cell sets, the processing module is configured to determine, for each first cell set in the plurality of first cell sets, the reference cell in the first cell set, in which the reference cell is different in each first cell set.

In an embodiment, the blinding detection resource includes at least one of: PDCCH candidates; or a CCE.

In an embodiment, the processing module is configured to receive, in a first cell, indication information sent by the network device, in which the indication information sent in the plurality of first cells indicates a plurality of cell groups; determine a target cell group to which the first cell belongs among the plurality of cell groups, and a cell group set to which the target cell group belongs; and determine a cell set corresponding to the cell group set.

With respect to the apparatuses in the above embodiments, the specific manners for performing operations for individual modules therein have been described in detail in the embodiments regarding the methods for determining the cell, which will not be elaborated herein.

Since the apparatus embodiments substantially correspond to the method embodiments, reference is made to the partial description of the method embodiments. The above-described apparatus embodiments are merely for the purpose of illustration, in which the modules described as separate components may be or may not be physically separated, and the components displayed as modules may be or may not be physical modules, that is, either located at one place or distributed onto a plurality of network modules. The object of embodiments of the present disclosure may be achieved by some or all of the modules in accordance with practical requirements. It would be appreciated and executable by those skilled in the art without creative efforts.

Embodiments of the present disclosure further provides a system for determining a cell, including: a terminal, and a network device, in which the terminal is configured to implement the method for determining the cell performed by the terminal as described in any of the above embodiments, and the network device is configured to implement the method for determining the cell performed by the network device as described in any of the above embodiments.

Embodiments of the present disclosure further provides a communication device, including: a processor; and a memory for storing a computer program, in which in a case where the computer program is executed by the processor, the method for determining the cell performed by the terminal as described in any of the above embodiments is implemented.

Embodiments of the present disclosure further provides a communication device, including: a processor; and a memory for storing a computer program, in which in a case where the computer program is executed by the processor, the method for determining the cell performed by the network device as described in any of the above embodiments is implemented.

Embodiments of the present disclosure further provides a computer-readable storage medium, configured to store a computer program that, when executed by a processor, cause the method for determining the cell performed by the terminal as described in any of the above embodiments to be implemented.

Embodiments of the present disclosure further provides a computer-readable storage medium, configured to store a computer program that, when executed by a processor, cause the method for determining the cell performed by the network device as described in any of the above embodiments to be implemented.

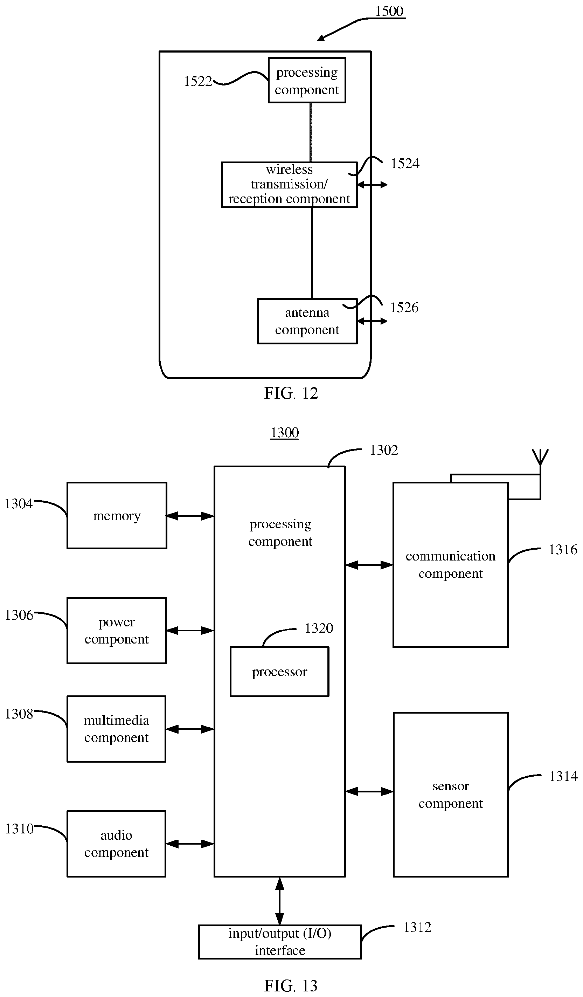

FIG. 12 is a schematic block diagram illustrating a device for determining a cell according to an embodiment of the present disclosure. The device 1200 may be provided as a base station. Referring to FIG. 12, the device 1200 includes a processing component 1222, a wireless transmission/reception component 1224, an antenna component 1226, and a signal processing portion specific to a wireless interface. The processing component 1222 may further include one or more processors. One of the processors in the processing component 1222 may be configured to implement the method for determining the cell performed by the network device as described in any of the above embodiments.

FIG. 13 is a schematic block diagram illustrating a device 1300 for determining a cell according to an embodiment of the present disclosure. For example, the device 1300 can be a mobile phone, a computer, a digital broadcast terminal, a messaging device, a game console, a tablet device, a medical device, a fitness device, a personal digital assistant, or the like.

Referring to FIG. 13, the device 1300 may include one or more of the following components: a processing component 1302, a memory 1304, a power component 1306, a multimedia component 1308, an audio component 1310, an input/output (I/O) interface 1312, a sensor component 1314, and a communication component 1316.

The processing component 1302 typically controls overall operations of the device 1300, such as the operations associated with display, phone calls, data communications, camera operations, and recording operations. The processing component 1302 can include one or more processors 1320 to execute instructions to perform all or some of the steps in the above-described method for determining a cell performed by the terminal. Moreover, the processing component 1302 may include one or more modules which facilitate the interaction between the processing component 1302 and other components. For instance, the processing component 1302 may include a multimedia module to facilitate the interaction between the multimedia component 1308 and the processing component 1302.

The memory 1304 is configured to store various types of data to support the operation of the device 1300. Examples of such data include instructions for any applications or methods operated on the device 1300, contact data, phonebook data, messages, pictures, videos, etc. The memory 1304 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 1306 provides power to various components of the device 1300. The power component 1306 may include a power management system, one or more power sources, and any other components associated with the generation, management, and distribution of power in the device 1300.

The multimedia component 1308 includes a screen providing an output interface between the device 1300 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 1308 includes a front camera and/or a rear camera. The front camera and/or the rear camera may receive an external multimedia datum while the device 1300 is in an operation mode, such as a photographing mode or a video mode. Each of the front camera and the rear camera may be a fixed optical lens system or have focus and optical zoom capability.

The audio component 1310 is configured to output and/or input audio signals. For example, the audio component 1310 includes a microphone (MIC) configured to receive an external audio signal when the device 1300 is in an operation mode, such as a call mode, a recording mode, and a voice recognition mode. The received audio signal may be further stored in the memory 1304 or transmitted via the communication component 1316. In some embodiments, the audio component 1310 further includes a speaker to output audio signals.

The I/O interface 1312 provides an interface between the processing component 1302 and peripheral interface modules, such as keyboards, click wheels, buttons, and the like. The buttons may include, but are not limited to, a home button, a volume button, a starting button, and a locking button.

The sensor component 1314 includes one or more sensors to provide status assessments of various aspects of the device 1300. For instance, the sensor component 1314 may detect an open/closed status of the device 1300, relative positioning of components, e.g., the display and the keypad, of the device 1300, a change in position of the device 1300 or a component of the device 1300, a presence or absence of user contact with the device 1300, an orientation or an acceleration/deceleration of the device 1300, and a change in temperature of the device 1300. The sensor component 1314 may include a proximity sensor configured to detect the presence of nearby objects without any physical contact. The sensor component 1314 may further include a light sensor, such as a CMOS or CCD image sensor, for use in imaging applications. In some embodiments, the sensor component 1314 may further include an accelerometer sensor, a gyroscope sensor, a magnetic sensor, a pressure sensor, or a temperature sensor.

The communication component 1316 is configured to facilitate communication, wired or wireless, between the device 1300 and other devices. The device 1300 can access a wireless network based on a communication standard, such as Wi-Fi, 2G, 3G, 4G LTE, 5G NR, or a combination thereof. In an illustrative embodiment, the communication component 1316 receives a broadcast signal or broadcast associated information from an external broadcast management system via a broadcast channel. In an illustrative embodiment, the communication component 1316 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In an illustrative embodiment, the device 1300 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic elements, for performing the method for determining a cell performed by the terminal in the above-mentioned embodiments.

In an illustrative embodiment, there is also provided a non-transitory computer readable storage medium including instructions, such as included in the memory 1304, executable by the processor 1320 in the device 1300, for completing the above-mentioned method for determining a cell performed by the terminal. For example, the non-transitory computer-readable storage medium may be a ROM, a random access memory (RAM), a CD-ROM, a magnetic tape, a floppy disc, an optical data storage device, and the like.

Other embodiments of the present disclosure will be apparent to those skilled in the art from consideration of the specification and practice of the present disclosure disclosed here. The present disclosure is intended to cover any variations, uses, or adaptations of the present disclosure following the general principles thereof and including common knowledge or conventional technical means known in the art but not disclosed in the present disclosure. The specification and examples should be considered as illustrative only, with a true scope and spirit of the present disclosure being indicated by the appended claims.

It will be appreciated that the present disclosure is not limited to the exact construction that has been described above and illustrated in the accompanying drawings, and that various modifications and changes can be made without departing from the scope thereof. The scope of the present disclosure is only limited by the appended claims.

It should be noted that the relational terms herein, such as "first" and "second", are used only for differentiating one entity or operation, from another entity or operation, which, however do not necessarily require or imply that there should be any real relationship or sequence. Moreover, the terms "comprise", "include" or any other variations thereof are meant to cover non-exclusive including, so that the process, method, article or device comprising a series of elements do not only comprise those elements, but also comprise other elements that are not explicitly listed or also comprise the inherent elements of the process, method, article or device. In the case that there are no more restrictions, an element qualified by the statement "comprises a ..." does not exclude the presence of additional identical elements in the process, method, article or device that comprises the said element.

The method and apparatus provided by embodiments of the present disclosure have been described in detail above. The principles and embodiments of the present disclosure have been described herein by applying specific examples, and the description of the above embodiments is only for helping to understand the methods and core ideas of the present disclosure. Moreover, those skilled in the art may change the specific embodiments and the scope of application according to the ideas of the present disclosure. In summary, the contents of the present specification should not be construed as limiting the present disclosure.

**Claims**

1. A method for determining a cell, performed by a terminal, comprising:

determining at least one cell set corresponding to multi-cell scheduling downlink control information; and

determining, for each first cell set in the at least one cell set, a reference cell in the first cell set, wherein a blinding detection resource occupied by the multi-cell scheduling downlink control information in a case of scheduling a cell in the first cell set is determined in the reference cell in the first cell set.

2. The method according to claim 1, wherein determining the reference cell in the first cell set comprises: determining the reference cell in the first cell set according to a cell identity.

3. The method according to claim 2, wherein determining the reference cell in the first cell set according to the cell identity comprises:

determining a cell having a maximum cell identity or a cell having a minimum cell identity in the first cell set as the reference cell in the first cell set in a case where the reference cell in the first cell set comprises one cell; or

determining a plurality of cells in the first cell set in a descending order of the cell identities or a plurality of cells in the first cell set in an ascending order of the cell identities as the reference cell in the first cell set in a case where the reference cell in the first cell set comprises the plurality of cells.

4. The method according to claim 1, wherein determining the reference cell in the first cell set comprises: determining the reference cell in the first cell set according to the blinding detection resource occupied by a DCI configured in each cell in the first cell set.

5. The method according to claim 4, wherein determining the reference cell in the first cell set according to the blinding detection resource occupied by the DCI configured in each cell in the first cell set comprises:

determining a cell having fewest blinding detection resources occupied by the DCI in the first cell set as the reference cell in the first cell set in a case where the reference cell in the first cell set comprises one cell; or

determining a plurality of cells in the first cell set in an ascending order of blinding detection resources occupied by the DCI as the reference cell in the first cell set in a case where the reference cell in the first cell set comprises a plurality of cells.

6. The method according to claim 4, wherein the DCI comprises at least one of:

a traditional DCI; or
all DCIs configured in the cell.

7. The method according to claim 1, wherein determining the reference cell in the first cell set comprises: determining a cell in the first cell set configured to determine a multi-cell scheduling downlink control information size budget as the reference cell in the first cell set.

8. The method according to claim 1, wherein, in a case where the reference cell in the first cell set comprises a plurality of cells, determining the blinding detection resource occupied by the multi-cell scheduling downlink control information in a case of scheduling the cell in the first cell set in the reference cell in the first cell set comprises: determining the blinding detection resource occupied by the multi-cell scheduling downlink control information on each cell in the reference cell in the first cell set.

9. The method according to claim 8, wherein determining the blinding detection resource occupied by the multi-cell scheduling downlink control information on each cell in the reference cell in the first cell set comprises: determining the blinding detection resource according to a determination result and a quantization coefficient on each cell.

10. The method according to claim 9, wherein the quantization coefficient is determined according to a numeric count of the plurality of cells comprised by the reference cell.

11. The method according to claim 1, wherein determining the reference cell in the first cell set comprises: determining a cell in the first cell set configured with a search space corresponding to the multi-cell scheduling downlink control information as the reference cell in the first cell set.

12. The method according to any one of claims 1 to 11, wherein the blinding detection resource occupied by the multi-cell scheduling downlink control information in a case of scheduling a cell in each first cell set in a plurality of first cell sets is determined on the same reference cell in a case where the at least one cell set comprises a plurality of cell sets and an intersection cell exists among the plurality of cell sets, and the plurality of first cell sets comprise the same reference cell.

13. The method according to any one of claims 1 to 11, wherein, in a case where the at least one cell set comprises a plurality of cell sets and an intersection cell exists among the plurality of cell sets, determining, for each first cell set in the at least one cell set, the reference cell in the first cell set comprises:
determining, for each first cell set in a plurality of first cell sets, the reference cell in the first cell set, wherein the reference cell is different in each first cell set.

14. The method according to any one of claims 1 to 11, wherein the blinding detection resource comprises at least one of:

> physical downlink control channel (PDCCH) candidates; or
> a control channel element (CCE).

15. The method according to any one of claims 1 to 11, wherein determining at least one cell set corresponding to the multi-cell scheduling downlink control information comprises:

> determining a configuration parameter for each cell in a plurality of cells; and
> determining that a cell having the same configuration parameter belongs to a cell set corresponding to the multi-cell scheduling downlink control information.

16. A method for determining a cell, performed by a network device, comprising:

> determining at least one cell set corresponding to multi-cell scheduling downlink control information; and
> determining, for each first cell set in the at least one cell set, a reference cell in the first cell set, wherein a blinding detection resource occupied by the multi-cell scheduling downlink control information in a case of scheduling a cell in the first cell set is determined in the reference cell in the first cell set.

17. The method according to claim 16, wherein determining the reference cell in the first cell set comprises:
determining the reference cell in the first cell set according to a cell identity.

18. The method according to claim 17, wherein determining the reference cell in the first cell set according to the cell identity comprises:

> determining a cell having a maximum cell identity or a cell having a minimum cell identity in the first cell set as the reference cell in the first cell set in a case where the reference cell in the first cell set comprises one cell; or
> determining a plurality of cells in the first cell set in a descending order of the cell identities or a plurality of cells in the first cell set in an ascending order of the cell identities as the reference cell in the first cell set in a case where the reference cell in the first cell set comprises the plurality of cells.

19. The method according to claim 16, wherein determining the reference cell in the first cell set comprises:
determining the reference cell in the first cell set according to the blinding detection resource occupied by a DCI configured in each cell in the first cell set.

20. The method according to claim 19, wherein determining the reference cell in the first cell set according to the blinding detection resource occupied by the DCI configured in each cell in the first cell set comprises:

> determining a cell having fewest blinding detection resources occupied by the DCI in the first cell set as the reference cell in the first cell set in a case where the reference cell in the first cell set comprises one cell; or
> determining a plurality of cells in the first cell set in an ascending order of blinding detection resources occupied by the DCI as the reference cell in the first cell set in a case where the reference cell in the first cell set comprises a plurality of cells.

21. The method according to claim 19, wherein the DCI comprises at least one of:

> a traditional DCI; or
> all DCIs configured in the cell.

22. The method according to claim 16, wherein determining the reference cell in the first cell set comprises:
determining a cell in the first cell set configured to determine a multi-cell scheduling downlink control information size budget as the reference cell in the first cell set.

23. The method according to claim 16, wherein, in a case where the reference cell in the first cell set comprises a plurality of cells, determining the blinding detection resource occupied by the multi-cell scheduling downlink control information in a case of scheduling the cell in the first cell set in the reference cell in the first cell set comprises:
determining the blinding detection resource occupied by the multi-cell scheduling downlink control information on each cell in the reference cell in the first cell set.

**24.** The method according to claim 23, wherein determining the blinding detection resource occupied by the multi-cell scheduling downlink control information on each cell in the reference cell in the first cell set comprises:
determining the blinding detection resource according to a determination result and a quantization coefficient on each cell.

**25.** The method according to claim 24, wherein the quantization coefficient is determined according to a numeric count of the plurality of cells comprised by the reference cell.

**26.** The method according to claim 16, wherein determining the reference cell in the first cell set comprises:
determining a cell in the first cell set configured with a search space corresponding to the multi-cell scheduling downlink control information as the reference cell in the first cell set.

**27.** The method according to any one of claims 16 to 26, wherein the blinding detection resource occupied by the multi-cell scheduling downlink control information in a case of scheduling a cell in each first cell set in a plurality of first cell sets is determined on the same reference cell in a case where the at least one cell set comprises a plurality of cell sets and an intersection cell exists among the plurality of cell sets, and the plurality of first cell sets comprise the same reference cell.

**28.** The method according to any one of claims 16 to 26, wherein, in a case where the at least one cell set comprises a plurality of cell sets and an intersection cell exists among the plurality of cell sets, determining, for each first cell set in the at least one cell set, the reference cell in the first cell set comprises:
determining, for each first cell set in a plurality of first cell sets, the reference cell in the first cell set, wherein the reference cell is different in each first cell set.

**29.** The method according to any one of claims 16 to 26, wherein the blinding detection resource comprises at least one of:

physical downlink control channel (PDCCH) candidates; or
a control channel element (CCE).

**30.** The method according to any one of claims 16 to 26, wherein determining the at least one cell set corresponding to the multi-cell scheduling downlink control information comprises:

receiving, in a first cell, indication information sent by the network device, wherein the indication information sent in a plurality of first cells indicates a plurality of cell groups;
determining a target cell group to which the first cell belongs among the plurality of cell groups, and a cell group set to which the target cell group belongs; and
determining a cell set corresponding to the cell group set.

**31.** An apparatus for determining a cell, comprising:
a processing module configured to determine at least one cell set corresponding to multi-cell scheduling downlink control information; and determine, for each first cell set in the at least one cell set, a reference cell in the first cell set, wherein a blinding detection resource occupied by the multi-cell scheduling downlink control information in a case of scheduling a cell in the first cell set is determined in the reference cell in the first cell set.

**32.** An apparatus for determining a cell, comprising:
a processing module configured to determine at least one cell set corresponding to multi-cell scheduling downlink control information; and determining, for each first cell set in the at least one cell set, a reference cell in the first cell set, wherein a blinding detection resource occupied by the multi-cell scheduling downlink control information in a case of scheduling a cell in the first cell set is determined in the reference cell in the first cell set.

**33.** A system for determining a cell, comprising: a terminal, and a network device, wherein the terminal is configured to implement the method for determining the cell according to any one of claims 1 to 15, and the network device is configured to implement the method for determining the cell according to any one of claims 16 to 30.

**34.** A communication device, comprising:

a processor; and
a memory for storing a computer program, wherein in a case where the computer program is executed by the processor, the method for determining the cell according to any one of claims 1 to 15 is implemented.

**35.** A communication device, comprising:

a processor; and
a memory for storing a computer program, wherein in a case where the computer program is executed by the processor, the method for determining the cell according to any one of claims 16 to 30 is implemented.

**36.** A computer-readable storage medium, configured to store a computer program that, when executed by a processor, cause the method for determining the cell according to any one of claims 1 to 15 to be implemented.

37. A computer-readable storage medium, configured to store a computer program that, when executed by a processor, cause the method for determining the cell according to any one of claims 16 to 30 to be implemented.

determining at least one cell set corresponding to multi-cell scheduling downlink control information — S101

determining, for each first cell set in the at least one cell set, a reference cell in the first cell set, in which a blinding detection resource occupied by the multi-cell scheduling downlink control information in a case of scheduling a cell in the first cell set is determined in the reference cell in the first cell set — S102

FIG. 1

determining at least one cell set corresponding to multi-cell scheduling downlink control information — S101

determining, for each first cell set in the at least one cell set, the reference cell in the first cell set according to a cell identity, in which a blinding detection resource occupied by the multi-cell scheduling downlink control information in a case of scheduling a cell in the first cell set is determined in the reference cell in the first cell set — S201

FIG. 2

determining at least one cell set corresponding to multi-cell scheduling downlink control information — S101

determining, for each first cell set in the at least one cell set, the reference cell in the first cell set according to a blinding detection resource occupied by a DCI configured in each cell in the first cell set, in which a blinding detection resource occupied by the multi-cell scheduling downlink control information in a case of scheduling a cell in the first cell set is determined in the reference cell in the first cell set — S301

FIG. 3

determining at least one cell set corresponding to multi-cell scheduling downlink control information — S101

determining, for each first cell set in the at least one cell set, a cell in the first cell set configured to determine a multi-cell scheduling downlink control information size budget as the reference cell in the first cell set, in which a blinding detection resource occupied by the multi-cell scheduling downlink control information in a case of scheduling a cell in the first cell set is determined in the reference cell in the first cell set — S401

FIG. 4

| determining at least one cell set corresponding to multi-cell scheduling downlink control information | S101 |

↓

| determining, for each first cell set in the at least one cell set, a cell in the first cell set configured with a search space corresponding to multi-cell scheduling downlink control information as the reference cell in the first cell set, in which a blinding detection resource occupied by the multi-cell scheduling downlink control information in a case of scheduling a cell in the first cell set is determined in the reference cell in the first cell set | S501 |

FIG. 5

| determining at least one cell set corresponding to multi-cell scheduling downlink control information | S101 |

↓

| determining, for each first cell set in the at least one cell set, the reference cell in the first cell set, in which the blinding detection resource occupied by the multi-cell scheduling downlink control information is determined on each cell in the reference cell in the first cell set | S601 |

FIG. 6

table1-0

| carrier indicator field in scheduling cell | scheduling cell identity |
|---|---|
| 0 | 2 |
| | |
| | |
| | |

table1-1

| carrier indicator field in scheduling cell | scheduling cell identity |
|---|---|
| | |
| 1 | 0 |
| 2 | 0 |
| | |

table1-2

| carrier indicator field in scheduling cell | scheduling cell identity |
|---|---|
| | |
| 1 | 0 |
| | |
| 3 | 0 |

Cell#0
MC-DCI    PDSCH

Cell#1
PDSCH

Cell#2
PDSCH

FIG. 7

{0,1,2,3}  {3}  {3,4,5,6}  {5,6,7}

first cell group set

{8,9}  {8}

second cell group set

{0,1,2,3,4,5,6,7}
cell set

{8,9}
cell set

FIG. 8

determining at least one cell set corresponding to multi-cell scheduling downlink control information — S901

determining, for each first cell set in the at least one cell set, a reference cell in the first cell set, in which a blinding detection resource occupied by the multi-cell scheduling downlink control information in a case of scheduling a cell in the first cell set is determined in the reference cell in the first cell set — S902

FIG. 9

apparatus for determining cell

processing module — S1001

FIG. 10

apparatus for determining cell

processing module — S1101

FIG. 11

1500

processing component — 1522

1524 — wireless transmission/ reception component

1526 — antenna component

FIG. 12

1300

1302 — processing component

1304 — memory

1306 — power component

1308 — multimedia component

1310 — audio component

1320 — processor

1316 — communication component

1314 — sensor component

1312 — input/output (I/O) interface

FIG. 13

# EP 4 618 670 A1

<table>
<tr><td colspan="2">INTERNATIONAL SEARCH REPORT</td><td>International application No.<br><br>**PCT/CN2022/130445**</td></tr>
</table>

**A.    CLASSIFICATION OF SUBJECT MATTER**

H04W72/12(2023.01)i;  H04W72/04(2023.01)i;  H04W72/23(2023.01)i

According to International Patent Classification (IPC) or to both national classification and IPC

**B.    FIELDS SEARCHED**

Minimum documentation searched (classification system followed by classification symbols)

IPC: H04W,H04L,H04B

Documentation searched other than minimum documentation to the extent that such documents are included in the fields searched

Electronic data base consulted during the international search (name of data base and, where practicable, search terms used)

3GPP, CJFD, CNABS, CNTXT, DWPI, ENTXT, ENTXTC, VEN, WPABS, WPABSC: 参考小区, 调度, 多个小区, 多小区, 盲检, 下行控制信息, 小区集, 小区集合, blind, cell?, DCI, reference, scheduling, set, detect+, cell?, plurality, ID, identifier

**C.    DOCUMENTS CONSIDERED TO BE RELEVANT**

| Category* | Citation of document, with indication, where appropriate, of the relevant passages | Relevant to claim No. |
|---|---|---|
| A | CN 115245031 A (BEIJING XIAOMI MOBILE SOFTWARE CO., LTD.) 25 October 2022 (2022-10-25)<br>abstract, and claims 1-23 | 1-37 |
| A | CN 113473611 A (VIVO MOBILE COMMUNICATION CO., LTD.) 01 October 2021 (2021-10-01)<br>entire document | 1-37 |
| A | CN 114696950 A (VIVO MOBILE COMMUNICATION CO., LTD.) 01 July 2022 (2022-07-01)<br>entire document | 1-37 |
| A | CN 115245033 A (BEIJING XIAOMI MOBILE SOFTWARE CO., LTD.) 25 October 2022 (2022-10-25)<br>entire document | 1-37 |
| A | US 2022046673 A1 (QUALCOMM INC.) 10 February 2022 (2022-02-10)<br>entire document | 1-37 |

☑ Further documents are listed in the continuation of Box C.          ☑ See patent family annex.

| | |
|---|---|
| *     Special categories of cited documents:<br>"A"   document defining the general state of the art which is not considered to be of particular relevance<br>"D"   document cited by the applicant in the international application<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
|---|---|
| **22 June 2023** | **23 June 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2022/130445** |

**C. DOCUMENTS CONSIDERED TO BE RELEVANT**

| Category* | Citation of document, with indication, where appropriate, of the relevant passages | Relevant to claim No. |
| --- | --- | --- |
| A | WO 2021197336 A1 (VIVO MOBILE COMMUNICATION CO., LTD.) 07 October 2021 (2021-10-07) <br> entire document | 1-37 |

Form PCT/ISA/210 (second sheet) (July 2022)

**INTERNATIONAL SEARCH REPORT**
Information on patent family members

| International application No. |
| --- |
| **PCT/CN2022/130445** |

| Patent document cited in search report | | | Publication date (day/month/year) | Patent family member(s) | | | Publication date (day/month/year) |
| --- | --- | --- | --- | --- | --- | --- | --- |
| CN | 115245031 | A | 25 October 2022 | | None | | |
| CN | 113473611 | A | 01 October 2021 | WO | 2021197336 | A1 | 07 October 2021 |
| | | | | EP | 4117366 | A1 | 11 January 2023 |
| | | | | US | 2023021455 | A1 | 26 January 2023 |
| CN | 114696950 | A | 01 July 2022 | | None | | |
| CN | 115245033 | A | 25 October 2022 | | None | | |
| US | 2022046673 | A1 | 10 February 2022 | WO | 2022032291 | A1 | 10 February 2022 |
| WO | 2021197336 | A1 | 07 October 2021 | US | 2023021455 | A1 | 26 January 2023 |
| | | | | EP | 4117366 | A1 | 11 January 2023 |

Form PCT/ISA/210 (patent family annex) (July 2022)